# EUROPEAN PATENT SPECIFICATION

(11) **EP 2 135 769 B1**
(45) Date of publication and mention of the grant of the patent: **23.02.2011**
(21) Application number: 09006478.3
(22) Date of filing: 13.05.2009
(51) Int. Cl.: B60K 31/00, B60T 7/22, B60W 30/14, B60W 30/18, B60W 10/18, B60W 10/10, B60W 10/06

(54) **Driving support device and driving support method**
Vorrichtung zur Fahrunterstützung und Verfahren zur Fahrunterstützung
Dispositif d'assistance à la conduite et procédé d'assistance à la conduite

(30) Priority: 18.06.2008 JP 2008159581
(43) Date of publication of application: 23.12.2009
(73) Proprietor: Aisin AW Co., Ltd., Fujii-cho Anjo-shi, Aichi 444-1192 (JP)
(72) Inventor: Miyajima, Takayuki c/o AISIN AW CO., LTD., Okazaki-shi, Aichi 444-8564 (JP); Nakajima, Akihiro c/o AISIN AW CO., LTD., Okazaki-shi, Aichi 444-8564 (JP)
(74) Representative: Kramer - Barske - Schmidtchen

(56) References cited:
- EP-A- 0 795 700
- EP-A- 0 941 902
- WO-A-03/104014
- US-B1- 6 182 000

## Description

### BACKGROUND OF THE INVENTION

### 1. Field of the Invention

The present invention relates to a driving support device and a driving support method, as well as a computer-readable medium embodying a driving support program.

### 2. Description of the Related Art

In a conventional device for controlling the braking force of a vehicle, a vehicle is decelerated by switching to a gear speed whereby a deceleration closest to a target deceleration, without exceeding the target deceleration, may be obtained, and using an engine brake at the gear speed; insufficient deceleration by the engine brake is compensated by a brake (see Japanese Patent No. 3858952, EP 941902 and US 6182000).

### SUMMARY OF THE INVENTION

However, the related art does not allow for smooth acceleration when increasing speed again after decelerating.
The related art focuses on the target deceleration and switches to a gear speed at which a deceleration closest to the target deceleration may be obtained without exceeding the target acceleration. In the case of acceleration after the deceleration operation, e.g. when decelerating before entry into a predetermined road section and acceleration after exiting, switching the gear speed in accordance with the target deceleration may result in a gear speed unsuitable for increasing speed in the acceleration phase. As a consequence, smooth acceleration cannot be achieved. In the related art, the user cannot set whether the gear speed is switched or whether deceleration to a target vehicle speed is carried out. Therefore, if factory default setting is met while the vehicle is in motion, then factory default control is executed. To improve driving comfort, however, the user should be allowed to set the control executed by the driving support device, and the driving support device should be capable of executing the control in accordance with the user's setting.

The present invention provides art that facilitates smooth acceleration when increasing speed after deceleration. The present invention further provides art that executes a driving support control in accordance with a user's setting.

A driving support device according to a first aspect of the present invention includes: a vehicle speed information obtaining unit that obtains a target vehicle speed for traveling through a predetermined road section ahead of the host vehicle; an acceleration gear ratio obtaining unit that obtains an acceleration gear ratio for accelerating the host vehicle to a vehicle speed faster than the target vehicle speed after traveling the predetermined road section; a driving support control settings obtaining unit that obtains the driving support control settings whether execution of a driving support control is permitted, with respect to the predetermined road section; a gear ratio control unit that, if the driving support control settings indicate that execution of a gear ratio control is permitted, sets a gear ratio of the host vehicle to the acceleration gear ratio before the host vehicle reaches the start point of the predetermined road section; and a deceleration control unit that, if the driving support control settings indicate that execution of a deceleration control using the brake portion is permitted, controls the braking portion to decelerate the host vehicle to the target vehicle speed before the host vehicle reaches the start point of the predetermined road section. According to the first aspect, it is possible to switch between modes of executing the driving support control depending on a user's setting. Here, the acceleration gear ratio is the most appropriate gear ratio for accelerating the host vehicle, based on the target vehicle speed set for traveling a predetermined road section ahead of the host vehicle, to a vehicle speed farster than the target vehicle speed. Furthermore, according to the first aspect, a gear ratio for accelerating the host vehicle after traveling through the predetermined road section is used to determine the acceleration gear ratio. Thus, according to the first aspect, before reaching the predetermined road section, an acceleration gear ratio is achieved that is suitable for accelerating the host vehicle to a vehicle speed faster than the target vehicle speed, which enables smooth acceleration at an acceleration phase after the host vehicle travels the predetermined road section.

The present invention as described in the embodiments is also applicable as a program or method, wherein it is possible to switch a mode of the driving support control for traveling a predetermined road section based on driving support control settings as set by a user. Moreover, the driving support device, the driving support program, and the driving support method, as described above, include various types of embodiments. The present invention may be implemented in a stand-alone driving support device, and it may be implemented through parts used in common with respective components provided in the vehicle. For example, it is possible to provide a navigation device that is equipped with the driving support device described above, and to provide the driving support method and the driving support program as well. The present invention can also be modified as desired, such as by providing a portion of it in the form of software and a portion of it in the form of hardware, for example. The present invention may also be practiced in the form of a storage medium for a program that controls the driving support device. Obviously, such a software storage medium may be a magnetic storage medium, and it may also be a magneto optical storage medium. Furthermore, any storage medium that is developed henceforth can also be considered to be exactly the same.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a block diagram of a navigation device that includes a driving support device;
FIG 2 is a figure that shows an example of a curve zone;
FIG. 3A is a figure that shows combinations of modes of a driving support control, and FIG 3B is a figure that shows an example of a mode of the driving support control set per road characteristic;
FIG. 4 is a flowchart of the driving support process;
FIG. 5 is a flowchart of the vehicle deceleration process;
FIG. 6 is a flowchart of the deceleration start determination process;
FIG. 7 is a flowchart of the deceleration control process;
FIG. 8 is a flowchart of the second deceleration control process;
FIG. 9 is a flowchart of the second deceleration control process;
FIG. 10 is a flowchart of the vehicle speed restriction process;
FIG 11 is a flowchart of the second vehicle speed restriction process;
FIG. 12 is a flowchart of the gear ratio selection process;
FIG. 13 is a flowchart of the gear ratio obtaining process; and
FIG. 14 is an explanatory drawing that describes forces acting on a vehicle.

### DETAILED DESCRIPTION OF THE EMBODIMENTS

An embodiment of the present invention will be explained in the order shown below.
(1) Configuration of Navigation Device
(2) Driving Support Processing
   (2-1) Vehicle Deceleration Processing
   (2-2) Deceleration Start Determination Processing
   (2-3) Deceleration Control Processing
   (2-4) Vehicle Speed Restriction Processing
   (2-5) Gear Ratio Selection Processing
   (2-6) Gear Ratio Obtaining Processing
(3) Other Embodiments

### (1) Configuration of Navigation Device

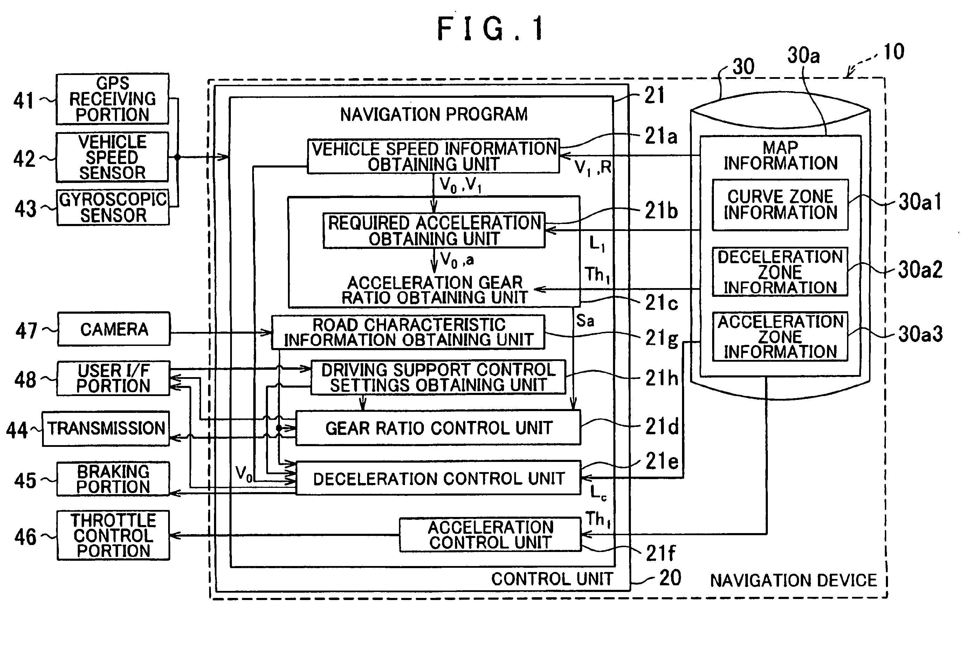

FIG 1 is a block diagram that shows the configuration of a navigation device 10 that incorporates a driving support device according to the present embodiment of the invention. The navigation device 10 includes a storage medium 30 and a control unit 20 that includes a CPU, a RAM, a ROM, and the like. The control unit 20 executes programs that are stored in the storage medium 30 and the ROM. In the present embodiment, a navigation program 21 is one such program that may be executed, wherein the navigation program 21 includes a function for setting a gear ratio suitable for acceleration in an acceleration zone and decelerating in a deceleration zone.

In the present embodiment, the vehicle equipped the navigation device 10 includes a GPS receiving portion 41, a vehicle speed sensor 42, a gyroscopic sensor 43, a transmission 44, a braking portion 45, and a throttle control portion 46 for implementing the functions of the navigation program 21. The functions of the navigation program 21 are implemented by coordinated operation among the various portions and the control unit 20.

The GPS receiving portion 41 receives radio signals from GPS satellites and outputs, through an interface (not shown), information for computing the current position of the vehicle to the control unit 20. The control unit 20 obtains the current position of the vehicle by receiving such information. The vehicle speed sensor 42 outputs a signal to the control unit 20 that indicates the rotational speed of a wheel of the vehicle. The control unit 20 obtains the speed of the vehicle by receiving the signal through an interface (not shown). The gyroscopic sensor 43 outputs a signal that indicates the direction the host vehicle is facing. The control unit 20 obtains the direction in which the host vehicle is traveling by receiving the signal through an interface (not shown). The vehicle speed sensor 42 and the gyroscopic sensor 43 are used to correct the current position of the host vehicle indicated by the output signal from the GPS receiving portion 41. The current position of the host vehicle may also be corrected as necessary based on the driving path of the host vehicle. Note that various other configurations can also be used to obtain information that indicates the operation of the vehicle. Configurations that use a sensor and a camera to specify the current position of the host vehicle and a configuration that uses GPS signals, the vehicle's path on a map, vehicle-to-vehicle communication, and road-to-vehicle communication to obtain host vehicle operation information may also be used.

In order to obtain an image of the road on which the host vehicle is traveling and the road's surroundings, a camera 47 is provided in the host vehicle such that the surroundings of the host vehicle are included in the field of view of the camera 47, and the camera 47 outputs image information that shows the image taken. The control unit 20 obtains the image information through an interface (not shown), and extracts road characteristics by using a road characteristic information obtaining unit 21g that will be described later. In the present embodiment, sensors for detecting the road surface condition (e.g. a road surface µ sensor) and the weather condition (e.g. a raindrop sensor), as well as a communication unit for carrying out wireless communication such as road-to-vehicle communication or vehicle-to-vehicle communication are also provided for extracting road characteristics. A user interface portion 48 may include a touch panel display, various switches, a speaker, a microphone, and the like. The control unit 20 informs the user of various information through the user interface portion 48. The control unit 20 may also obtain information that indicates a user operation through the user interface portion 48.

The transmission 44 includes a stepped transmission with a torque converter that has a plurality of gear speeds, such as six forward speeds, one reverse speed, and the like. The transmission 44 may transmit the driving force of an engine to the wheel of the host vehicle while using the gear ratios that correspond to the various gear speeds to regulate the engine speed. Through an interface (not shown), the control unit 20 outputs a control signal for switching the gear speed to the transmission 44 to switch the gear speed. In the present embodiment, as the gear speed increases to a higher gear, such as from the forward first speed towards the forward sixth speed, the gear ratio decreases.

The braking portion 45 includes a device that controls the pressure of a wheel cylinder, which regulates the degree of deceleration by a brake mounted in the wheel of the host vehicle. The control unit 20 outputs a control signal to the braking portion 45 to regulate the pressure of the wheel cylinder. Accordingly, the control signal output to the braking portion 45 by the control unit 20 increases the pressure of the wheel cylinder, which increases the braking force generated by the brake and decelerates the host vehicle.

The throttle control portion 46 includes a device that controls a throttle valve that regulates the amount of air supplied to the engine of the host vehicle. The control unit 20 outputs a control signal to the throttle control portion 46 to regulate the opening of the throttle valve. Accordingly, output of the control signal to the throttle control unit 46 by the control unit 20 increases the amount of intake air, which increases the engine speed. Note that because the control unit 20 is a component that gives control instructions to the transmission 44 and the throttle control portion 46, the control unit 20 may obtain both the current gear ratio Sn set by the transmission 44 and the current throttle opening Th set by the throttle control portion 46.

By executing the navigation program 21, the control unit 20 performs a route search and the like for the vehicle, based on the output information from the GPS receiving portion 41 and map information, which will be described later. The control unit 20 also performs route guidance and the like through a display portion and a speaker that are not shown in the drawings. In this case, in order to set the gear ratio for the transmission 44 and execute an acceleration control that uses the braking portion 45 and the throttle control portion 46, the navigation program 21 includes a vehicle speed information obtaining unit 21a, an acceleration gear ratio obtaining unit 21c (that incorporates a required acceleration obtaining unit 21b), a road characteristic information obtaining unit 21g, a driving support control settings obtaining unit 21h, a gear ratio control unit 21d, a deceleration control unit 21e, and an acceleration control unit 21f.

Map information 30a that the navigation program 21 uses to perform guidance is stored in the storage medium 30. The map information 30a includes node data that indicate nodes that are set on the roads that the vehicle travels; shape interpolation data that indicates the shapes of the roads between the nodes; link data that indicate connections between the nodes; data that indicate the roads and the features around them; and the like. The map information 30a is used to specify the current position of the host vehicle, to provide guidance to a destination, and the like. The node data and the link data are linked with information that indicates road grades. The node data also include information that indicates road attributes such as mountain passes and unpaved roads.

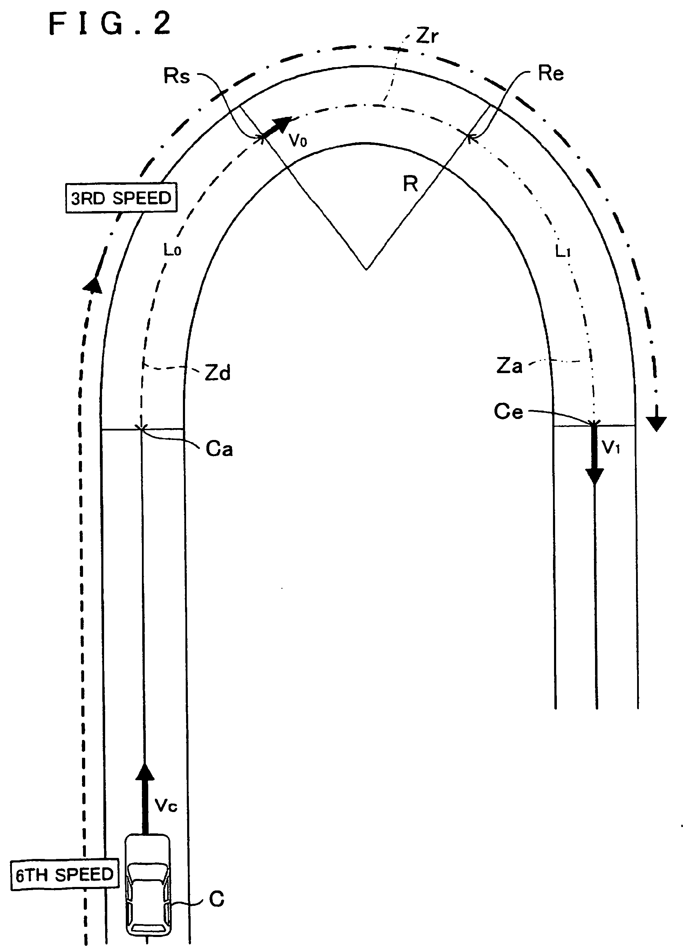

The present embodiment executes a deceleration control before the host vehicle reaches a curve zone (a section with a constant radius), and information that indicates the curve zone and the road before and after the curve zone is included in the map information 30a. FIG 2 is a drawing that shows an example curve zone Zr, and illustrates a situation where a host vehicle C is traveling toward the curve zone Zr, as indicated by a thin dashed line. According to the present embodiment, node data corresponding to the start point Rs of the curve zone Zr is linked to information that indicates the start point Rs of the curve zone Zr, and node data corresponding to the end point Re of the curve zone Zr is linked to information that indicates the end point Re of the curve zone Zr. Furthermore, shape interpolation data, which indicates the shape of the road between the start point Rs and the end point Re, indicates positions on the arc of the curve zone Zr. Based on the shape interpolation data, it is possible to identify a constant radius R of the curve zone Zr and a vehicle speed (a target vehicle speed V₀) for traveling at a constant vehicle speed through a section with the radius R. In the present embodiment, information that indicates the start point Rs and the end point Re of the curve zone Zr, as well as the shape interpolation data between the start point Rs and the end point Re, are referred as curve zone information 30al.

The section before the curve zone Zr is set having a deceleration zone Zd (a section indicated by a dashed-dotted line in FIG 2, e.g. a clothoid section) where the vehicle decelerates before reaching the curve zone Zr. In the present embodiment, node data corresponding to a start point Ca of the deceleration zone Zd is linked to information that indicates the start point Ca of the deceleration zone Zd. Note that in the present embodiment, an end point of the deceleration zone Zd coincides with the start point Rs of the curve zone Zr, and the shape of the road between the start point Ca of the deceleration zone Zd and the start point Rs of the curve zone Zr is indicated by shape interpolation data. Based on information that indicates the positions of the start point Ca and the end point Rs of the deceleration zone Zd, it is possible to identify a length L₀ of the deceleration zone Zd. For the present embodiment, information that indicates the start point Ca and the end point Rs of the deceleration zone Zd, as well as the shape interpolation data that indicates the shape of the road between the start point Ca and the end point Rs, are referred to as deceleration zone information 30a2.

The section after the above-described curve zone Zr is set having an acceleration zone Za (a section indicated by a dashed-two dotted line in FIG 2, e.g. a clothoid section) in which the vehicle is accelerated toward a predetermined point (an end point Ce of the acceleration zone Za) after traveling through the curve zone Zr. In the present embodiment, node data corresponding to the end point Ce of the acceleration zone Za is linked to information that indicates the end point Ce of the acceleration zone Za. Note that in the present embodiment, a start point of the acceleration zone Za coincides with the end point Re of the curve zone Zr, and the shape of the road between the start point Re and the end point Ce of the acceleration zone Za is indicated by the shape interpolation data.

Based on information that indicates the positions of the start point Re and the end point Ce of the acceleration zone Za, it is possible to identify a length L₁ of the acceleration zone Za. The node data corresponding to the end point Ce of the acceleration zone Za is linked to the speed limit at that point, and the speed limit is set as the recommended vehicle speed V₁ after traveling through the acceleration zone in the present embodiment. The throttle opening Th₁ at the start point Re of the acceleration zone Za is determined in advance to be used in an acceleration control that will be described later, and information that indicates the throttle opening Th₁ is linked to the node data corresponding to the end point Ce of the acceleration zone Za. In the present embodiment, information that indicates the start point Re and the end point Ce of the acceleration zone Za, as well as the shape interpolation data that indicates the shape of the road between the start point Re and the end point Ce, and information that indicates the recommended vehicle speed V₁ and the throttle opening Th₁ are designated as acceleration zone information 30a3.

Here, provided that the vehicle speed information obtaining unit is capable of obtaining, with respect to a predetermined road section ahead of the host vehicle, a target vehicle speed for traveling the predetermined road section, information that indicates the vehicle speed may be directly or indirectly obtained. If obtained directly, a configuration may be used where a target vehicle speed is linked to a predetermined road section, and the target vehicle speed linked to the predetermined road section is obtained. If obtained indirectly, a configuration may be used that determines the target vehicle speed based on information that indicates the predetermined road section and roads before and after the predetermined road section.

The predetermined road section is not limited provided that it is a section where the host vehicle is preferably decelerated to a target vehicle speed before reaching the road section and then accelerated after traveling the predetermined road section at the target vehicle speed. The predetermined road section may also be a curve zone or a zone with a grade of a predetermined shape. Furthermore, the target vehicle speed is not limited so long as it is a preferred vehicle speed for traveling the predetermined road section and may be set in advance. In the example of a curve zone, a configuration may be adopted where a constant speed is set as the target vehicle speed, since traveling a zone with a constant radius in the curve zone at a constant speed is preferable. Regarding a road with a grade, wherein the predetermined road section is set as a zone that includes a grade, a configuration may be adopted where the target vehicle speed is defined as decelerating before a start point of a downgrade to a target vehicle speed that is preferred for traveling the downgrade section.

The vehicle speed information obtaining unit 21a of the present embodiment obtains the target vehicle speed V₀ for traveling the curve zone Zr and the recommended vehicle speed V₁ for after traveling the curve zone Zr. The vehicle speed information obtaining unit 21a obtains such vehicle speed information by referring to the map information 30a. Namely, the control unit 20 uses the vehicle speed information obtaining unit 21a to determine the radius R of the curve zone Zr by referring to the curve zone information 30al and obtain the vehicle speed to be maintained at a constant vehicle while traveling through a section with the radius R, and set the obtained vehicle speed as the target vehicle speed V₀. For example, a vehicle speed (Gt·R)^{1/2} for traveling at a constant vehicle speed at a preset lateral acceleration Gt (e.g. 0.2 G) is calculated as the target vehicle speed V₀. The control unit 20 also obtains the recommended vehicle speed V by referring to the acceleration zone information 30a3.

The required acceleration obtaining unit 21b obtains the required acceleration for increasing the speed of the host vehicle from the target vehicle speed V₀ to the recommended vehicle speed V₁. Accordingly, the control unit 20 specifies the length L₁ of the acceleration zone based on the acceleration zone information 30a3 and obtain the required acceleration a for accelerating from the target vehicle speed V₀ to the recommended vehicle speed V₁ within the length L₁. Namely, based on information that indicates the start point Re and the end point Ce of the acceleration zone Za and the positions of intervening shape interpolation points, the distance between the start point Re and the end point Ce along the shape of the road is set as the length L₁. The required acceleration a to increase the vehicle speed from the target vehicle speed V₀ to the recommended vehicle speed V₁ within the distance L₁ is obtained as a=(V₁² - V₀²)/(2L₁) assuming uniform accelerated motion.

The acceleration gear ratio obtaining unit is not limited provided that it is capable of obtaining a gear ratio for accelerating the host vehicle to a vehicle speed faster than the target vehicle speed after traveling the predetermined road section, and at least capable of obtaining a gear ratio that enables acceleration greater than the target vehicle speed. For example, the acceleration gear ratio obtaining unit is capable of obtaining a gear ratio that enables acceleration from the target vehicle speed to a specific vehicle speed faster than the target vehicle speed, or obtaining a gear ratio that enables travel at a vehicle speed faster than the target vehicle speed when a rotational speed of a drive source is equal to a specific value. In other words, by setting such gear ratios as the acceleration gear ratio and achieving the acceleration gear ratio before completing travel through the predetermined road section, acceleration should be possible without changing the gear ratio at the acceleration phase after traveling the predetermined road section. Thus, the host vehicle can be smoothly accelerated after traveling the predetermined road section. Note that the gear ratio is not limited provided that it is at least a sufficient gear ratio required for acceleration to a vehicle speed faster than the target vehicle speed, and the gear ratio may be determined in advance to achieve smoother acceleration. For example, a parameter such as the throttle opening/closing operation at the start of acceleration, or the rotational speed of the host vehicle drive source may be estimated, and a gear ratio or the like that enables the most efficient acceleration based on the estimation can be selected.

The acceleration gear ratio obtaining unit 2 1 c of the present embodiment obtains the acceleration gear ratio Sa (where Sa equals any one of the first to sixth forward speeds), which is a gear ratio for accelerating the host vehicle at the required acceleration a. Accordingly, the control unit 20 obtains the throttle opening Th₁ by referring to the acceleration zone information 30a3, and determines the gear ratio based on the throttle opening Th₁, the required acceleration a, and the target vehicle speed V₀. In the present embodiment, the acceleration gear ratio Sa is the gear ratio of the gear ratios capable of generating the required acceleration a in which the fuel consumption is lowest in a state where the host vehicle is traveling at the target vehicle speed V₀ and the engine speed corresponding to the throttle opening The₁

According to this configuration, the host vehicle is accelerated from the target vehicle speed V₀ to the recommended vehicle speed V₁ while using fuel. Note that for the selection of the gear ratio here, a configuration such as one that prepares a fuel consumption map linked to the engine speed and the throttle opening Th₁ and selects the gear ratio based on the fuel consumption map can be employed. Further note that, while an engine speed corresponding to the throttle opening Th₁ is assumed here, the engine speed may obviously be determined based on a statistical value or the like.

The road characteristic information obtaining unit 21g obtains information that indicates the characteristics of roads on which the host vehicle is traveling. Road characteristics include, for example, information represented by the road surface condition, the environment around the road (poor field of vision, existence of a precipice, etc.), and the road grade. The control unit 20 uses the road characteristic obtaining unit 21g to obtain the characteristics of the roads on which the host vehicle is traveling based on information obtained from the camera 47, and a road surface µ sensor and a rain sensor (not shown in the drawings), and based on information obtained from the map information 30a.

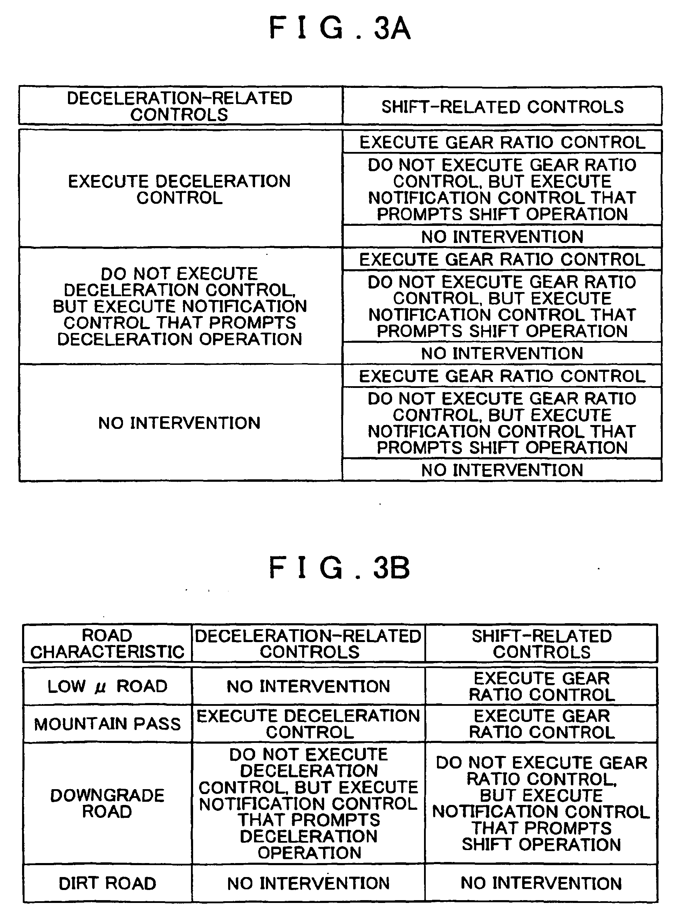

The driving support control settings obtaining unit 21h obtains information that indicates whether a driving support control may be executed with respect to a predetermined road section. For example, a user may set whether execution of the driving support control is permitted from the menu screen of the navigation device, and the setting is then obtained. The driving support control with respect to a predetermined road section is a control that is executed in order to support the driving of a user when traveling the predetermined road section, and also includes controls for setting a gear ratio and decelerating the host vehicle to the target vehicle speed before reaching the start point of the predetermined road section (i.e., controls performed by the gear ratio control unit 21d and the deceleration control unit 21e that will be described later). FIG. 3A is a figure that shows various modes of the driving support control in the present embodiment. As FIG. 3A shows, for the present embodiment with respect to deceleration-related controls, the user selects for each road characteristic any one of the following: executing a deceleration control for decelerating to the target vehicle speed V₀, executing a notification control that does not execute the deceleration control but prompts the user to perform a deceleration operation, and not intervening with the control related to decelerating to the target vehicle speed V₀. With respect to shift-related controls, the user may set in accordance with road characteristic, any one of the following: execution of a gear ratio control to shift to an acceleration gear ratio, execution of a notification control that does not execute the gear ratio control to prompt the user to shift operation to the acceleration gear ratio, and not intervening with a shift-related control.

The gear ratio control unit is not limited provided that it is capable of executing a control, depending on whether the driving support control settings indicate that the gear ratio control is executable, to set the gear ratio of the host vehicle to the acceleration gear ratio before the host vehicle reaches the start point of the predetermined road section. Namely, if the driving support control settings indicate that execution of the gear ratio control is permitted, the gear ratio of the host vehicle is set to the acceleration gear ratio. However, if the driving support control settings indicate that execution of the gear ratio control is not permitted, the gear ratio of the host vehicle is not set to the acceleration gear ratio. When setting to an acceleration gear ratio suitable for accelerating the host vehicle before the host vehicle reaches the start point of the predetermined road section, the gear ratio of the host vehicle before the predetermined road section is usually changed to a faster gear ratio. Therefore, setting the gear ratio to the acceleration gear ratio makes it possible to compensate for the deceleration before reaching the predetermined zone. In addition, travel in the predetermined road section may be stabilized by maintaining the acceleration gear ratio after reaching the predetermined road section. Note that setting of the gear ratio is not limited so long as the setting is performed for a transmission (e.g. a stepped transmission with a torque converter) mounted in the host vehicle. Namely, setting of the gear ratio is not limited, provided that the gear ratio is set in accordance with an instruction of a gear ratio for the transmission, wherein, based on the instruction, the transmission switches to the instructed gear ratio.

The gear ratio control unit 21d of the present embodiment sets the gear ratio of the host vehicle to the acceleration gear ratio Sa and provides notification that prompts the drive to shift to the acceleration gear ratio Sa, based on the driving support control settings, before the host vehicle reaches the start point Rs of the curve zone Zr. If the driving support control settings indicate that execution of the gear ratio control permitted, then the control unit 20 uses the gear ratio control unit 21d to obtain the acceleration gear ratio Sa and outputs a control signal to the transmission 44 to shift to the acceleration gear ratio Sa at a predetermined time in accordance with a process described below. Based on the control signal, the transmission 44 switches to the acceleration gear ratio. If the driving support control settings indicate that execution of the gear ratio control is not permitted, but execution of the notification control is permitted, the control unit 20 uses the gear ratio control unit 21d to obtain the acceleration gear ratio Sa and generate in the speaker (not shown) a voice signal to prompt the user to shift to the acceleration gear ratio Sa.

The deceleration control unit is not limited provided that it is capable of executing a control, depending on whether the driving support control settings indicate that execution of the deceleration control is permitted, to decelerate the host vehicle to the target vehicle speed before the host vehicle reaches the start point of the predetermined road section. Accordingly, if the driving support control settings indicate that execution of the deceleration control is permitted, the deceleration control is executed. However, if the driving control settings indicate that execution of the deceleration control is not permitted, the deceleration control is not executed. Note that the deceleration control is not limited provided that it enables deceleration of the host vehicle through control of a deceleration portion, such as a regulator of the rotational speed of the drive source (e.g. a throttle) and a brake, for decelerating the host vehicle. Alternative configurations that enable the host vehicle to achieve the target vehicle speed include, for example, a configuration that performs deceleration through a feedback control with respect to a reference parameter. Note that the reference parameter is not limited provided that it is an index for setting the vehicle speed of the host vehicle to the target vehicle speed. A required deceleration, a change in vehicle speed, and the like to reach the target vehicle speed within a distance spanning from the current position of the host vehicle to the start point of the predetermined road section may be used as reference parameters.

The deceleration control unit 21e of the present invention, based on the driving support control settings, decelerates the host vehicle to the target vehicle speed V₀ before reaching the curve zone Zr, and executes a notification control to prompt the user to decelerate the host vehicle. If the driving support control settings indicate that execution of the deceleration control is permitted, then the control unit 20 uses the deceleration control unit 2 1 e to execute a feedback control so that the vehicle speed reaches the target vehicle speed V₀ at the start point Rs of the curve zone Zr. Namely, the target vehicle speed V₀ is obtained, and the deceleration zone information 30a2 is referenced to obtained as the distance Lc along the road between the current position of the host vehicle and the end point Rs, based on information that indicates the current position of the host vehicle, the end point Rs, and the positions of shape interpolation points between the current position of the host vehicle and the end point Rs.

A required deceleration Gr (a negative acceleration when the traveling direction of the host vehicle is designated as the positive direction) for reducing the current vehicle speed Vc of the host vehicle to the target vehicle speed V₀ within the distance Lc is calculated as Gr=(V₀² - Vc²)/(2Lc) assuming uniform accelerated motion. In the present embodiment, the required deceleration Gr is successively obtained, and the deceleration of the host vehicle is initiated when the required deceleration Gr exceeds a predetermined threshold (LimG_h or LimG_L that will be described later). Namely, a deceleration Ge to be generated by an engine brake is determined based on the current gear ratio Sn of the transmission 44, and the engine speed at the current throttle opening Th, regulated by the throttle control portion 46. The control unit 20 then outputs a control signal to the braking portion 45 to generate a deceleration equivalent to the difference between the required deceleration Gr and the deceleration Ge (Gr - Ge) using a brake. Thus, the brake is operated by the braking portion 45 so as to compensate for the difference between the required deceleration Gr and the deceleration Ge (Gr - Ge).

Note that in the present embodiment, if execution of the gear ratio control and the deceleration control are permitted, the gear ratio is switched to the acceleration gear ratio Sa while the vehicle is decelerated in the deceleration zone Zd. At such time, switching of the gear ratio ordinarily results in a gear ratio with a larger torque. Therefore, setting the gear ratio to the acceleration gear ratio Sa makes it possible to compensate for the deceleration before reaching the curve zone.
If the driving support control settings indicate that execution of the deceleration control is not permitted, but that execution of the notification control is permitted, then the control unit 20 does not execute the deceleration control described above and instead generates in the speaker (not shown) a voice signal to prompt the user to decelerate the vehicle.

The acceleration control unit 21f controls acceleration after the host vehicle travels the curve zone Zr. Accordingly, the control unit 20 controls the throttle opening Th so that the vehicle speed increases from the target vehicle speed V₀ to the recommended vehicle speed V₁ in the acceleration zone Za spanning the distance L₁ from the end point Re of the curve zone Zr. Namely, while maintaining the acceleration gear ratio Sa, the control unit 20 outputs a control signal to the throttle control portion 46 to set the throttle opening to Th₁, and regulates the throttle opening Th₁ as necessary so that the host vehicle is accelerated at the required acceleration a.

According to the configuration described above, if the driving support control settings indicate that execution of the gear ratio control is permitted, the acceleration gear ratio Sa is set while the host vehicle is traveling the deceleration zone Zd. Therefore, the acceleration gear ratio Sa that is appropriate for accelerating the host vehicle to the recommended vehicle speed V₁ is selected when the host vehicle travels the acceleration zone Za, thereby enabling smooth acceleration in the acceleration zone Za. Furthermore, if the driving support control settings indicate that execution of the gear ratio control is not permitted but execution of the notification control regarding a shift operation is permitted, the user is prompted to shift to the acceleration gear ratio Sa that was determined as described above. Thus, smooth acceleration may be achieved in the acceleration zone Za if the user shifts to the acceleration gear ratio Sa as prompted by the notification.

### (2) Driving Support Processing

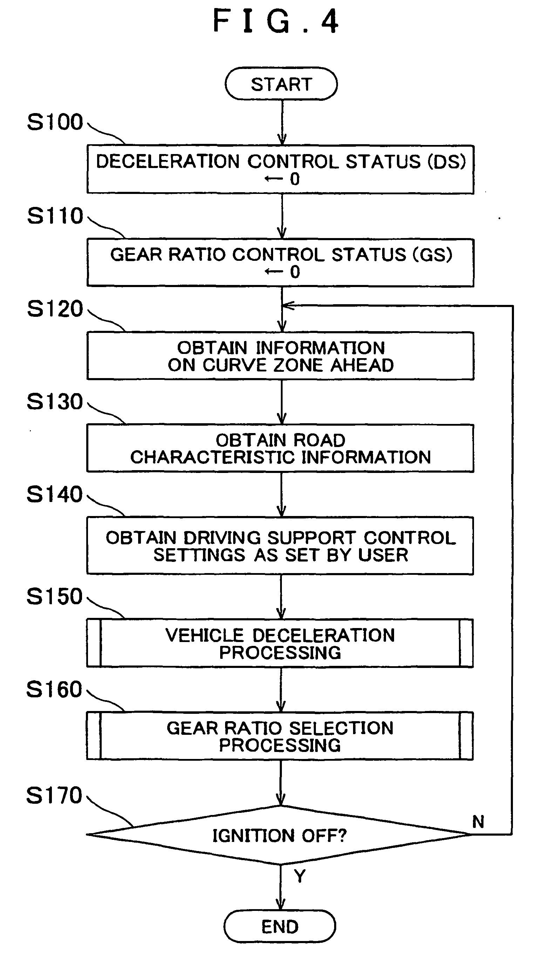

Next, the driving support process that is executed by the navigation device 10 in the configuration described above will be explained. When the navigation program 21 is executed by the navigation device 10, the various portions of the navigation program 21 execute the process that is shown in FIG 4. A status (called a deceleration control status DS) of the three different types of controls related to the deceleration control and a status (called a gear ratio control status GS) of the three different types of controls related to the gear ratio control are provided in the present embodiment, and the control unit 20 initializes variables that specify the deceleration control status DS and the gear ratio control status GS to 0 (S 100, S110). Note that in the present embodiment, DS=0 refers to a state where the vehicle speed is not controlled, DS=1 refers to a state where the vehicle speed is decelerated to the target vehicle speed V₀, and DS=2 refers to a state where the vehicle speed is maintained in the curve zone. Likewise, GS=0 refers to a state where the gear ratio is not controlled, GS=1 refers to a state where processing to compute the gear ratio is performed, and GS=2 refers to a state where processing to switch the gear ratio is performed.

Once the deceleration control status DS and the gear ratio control status GS are initialized, the control unit 20 obtains information on a curve zone present ahead of the host vehicle (S 120). Namely, the control unit 20 obtains the current position of the host vehicle based on the output signals from the GPS receiving portion 41 and the like, then refers to the map information 30a to determine whether a curve zone exists within a predetermined range ahead of the current position. If a curve zone exists, then the control unit 20 obtains the curve zone information 30al, the deceleration zone information 30a2, and the acceleration zone information 30a3 pertaining to the curve zone.

The control unit 20 next obtains the road characteristic information that indicates the characteristics of the roads around the host vehicle (S130), and obtains the permission settings for the driving support control that corresponds to the road characteristic information (S 140). Specifically, at S 130, the control unit 20 obtains image information ahead of the host vehicle from the camera 47, for example, and performs image recognition processing on the image information to extract characteristics such as a dirt (unpaved) road or snowy road, or a blind curve (a curve with poor forward visibility due to an obstruction). Characteristics such as a mountain pass or steep downhill road may also be extracted based on the grade of the road or a road attribute linked to the link data and node data. In addition, characteristics such as a low µ road may be extracted based on the information obtained from the road surface µ sensor and the raindrop sensor not shown in the drawings. Alternatively, the various characteristics mentioned above pertaining to the roads on which the vehicle is traveling may be extracted from the information obtained from the communication unit (not shown). Next at S140, the control unit 20 obtains the permission settings for the driving support control set by the user with respect to various road characteristics. At S140, at least the permission settings for the road characteristics corresponding to the road characteristic information (matching the road characteristic information) obtained at S130 should be obtainable. FIG. 3B shows an example of the settings for the driving support control for a given road characteristic. The settings are referenced in the vehicle deceleration process and the gear ratio selection process that will be described later.

The control unit 20 subsequently executes the vehicle deceleration process (S150) and the gear ratio selection process (S160), and obtains an output signal of an ignition switch (not shown) to determine whether the ignition has been turned off (S170). The process from S120 onward is repeated until it is determined that the ignition has been turned off.

### (2-1) Vehicle Deceleration Process

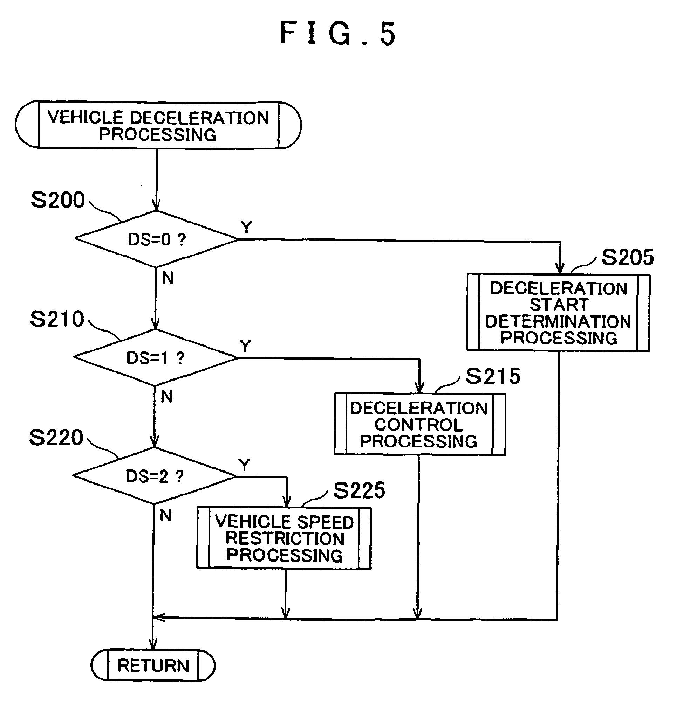

FIG 5 is a flowchart that shows the vehicle deceleration process at S 150. According to the vehicle deceleration process shown in FIG 5, the control unit 20 determines whether the deceleration control status DS equals 0 (S200), 1 (S210), or 2 (S220). If it is determined at S200 that DS=0, the control unit 20 executes the deceleration start determination process (S205); if it is determined at S210 that DS=1, the control unit 20 executes the deceleration control process (S215); and if it is determined at S220 that DS=2, the control unit 20 executes the vehicle speed restriction process (S225). In the case of another determination result and after executing S205, S215, and S225, the control unit 20 repeats the process of FIG 4.

### (2-2) Deceleration Start Determination Process

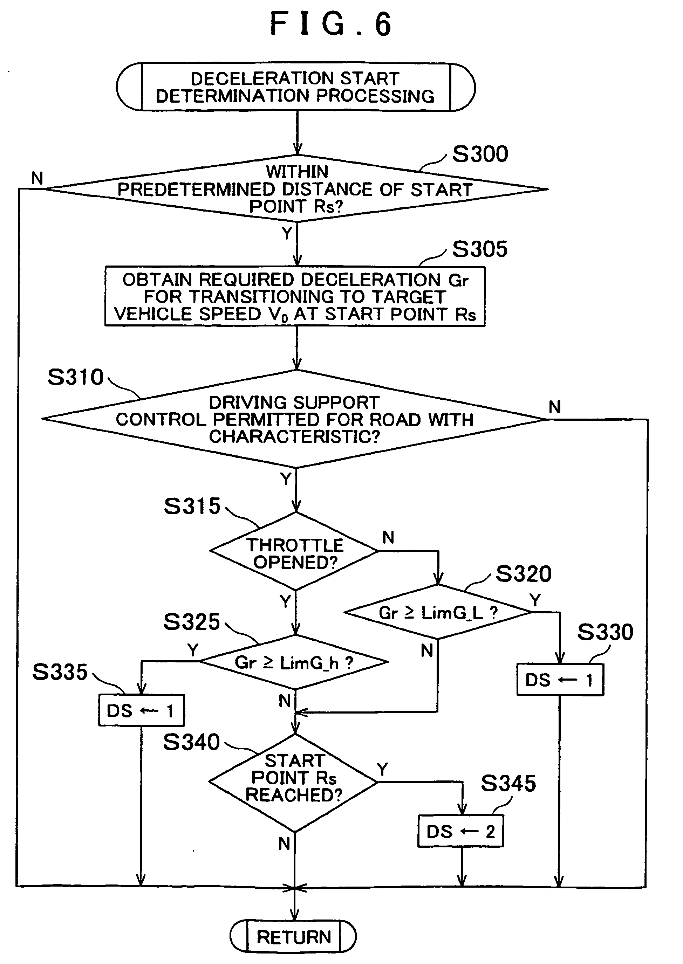

FIG 6 is a flowchart that shows the deceleration start determination process at S205. According to the deceleration start determination process, the deceleration control status DS is set to 1 or 2 based on conditions that will be described later. To this end, first, the control unit 20 uses the deceleration control unit 21e to determine whether the host vehicle has reached a specified distance before the start point Rs of the curve zone Zr (S300). Namely, the control unit 20 obtains the current position of the host vehicle based on the output signals from the GPS receiving portion 41 and the like, then refers to the curve zone information 30al to obtain the position of the start point Rs of the curve zone Zr and determine whether the host vehicle is at the predetermined distance before the position of the start point Rs. If it is determined at S300 that the host vehicle has not reached a predetermined distance before the start point Rs of the curve zone Zr, then the control unit 20 returns to the process shown in FIG 5.

If it is determined at S300 that the host vehicle has reached a predetermined distance before the start point Rs of the curve zone Zr, then the control unit 20 uses the vehicle speed information obtaining unit 21a and the deceleration control unit 21e to obtain the required deceleration Gr for reducing the vehicle speed of the host vehicle to the target vehicle speed V₀ at the start point Rs of the curve zone Zr (S305). Namely, the control unit 20 determines the radius R of the curve zone Zr based on the curve zone information 30al and obtains as the target vehicle speed V₀ a vehicle speed for traveling at a constant speed through a curve with the radius R. Furthermore, the distance Lc from the current position of the host vehicle to the end point Rs is obtained based on the current position of the host vehicle as specified from the output signals from the GPS receiving portion 41 and the like, the end point Rs of the deceleration zone Zd (the start point of the curve zone) as specified from the deceleration zone information 30a2, and the positions of shape interpolation points between the current position and the end point Rs. The current vehicle speed Vc is then obtained based on the output information of the vehicle speed sensor 42, and the required deceleration Gr is calculated as Gr=(V₀² - Vc²)/(2Lc).

The control unit 20 next determines whether the user has permitted execution of the driving support control for the road with the characteristics obtained at S 130, based on the driving support control settings obtained at S 140 (S310). The process will be explained using the example of FIG 3B. If the road characteristic obtaining unit 21g determine that the host vehicle is traveling on a low µ road, then the control unit 20 refers to the settings of the deceleration-related controls and the settings of the shift-related controls for the low µ road characteristic. If the road characteristic is a low µ road, according to FIG 3B, there is no intervention with respect to the deceleration-related controls, while the gear ratio control is set to be executed. Therefore, an affirmative determination (YES) is made and the process proceeds to S315. At S310, an affirmative determination (YES) is made unless there is no intervention set for the deceleration-related controls and/or the shift-related controls. Note that if the road characteristic obtaining unit 21g determine that the host vehicle is traveling on a dirt road, then reference to FIG 3B shows that when the road characteristic is a dirt road, no intervention is set for both the deceleration-related controls and the shift-related controls. Therefore, a negative determination (NO) is made at S310, after which the control unit 20 ends the deceleration start determination process and returns to the process of FIG. 5.

Next, the control unit 20 determines whether the throttle valve is open (i.e., whether the accelerator is depressed) (S315). Namely, the control unit 20 uses the deceleration control unit 21e to obtain the current throttle opening Th to determine whether the throttle valve is open. If it is determined at S315 that the throttle valve is not open (the accelerator is not depressed), then the control unit 20 uses the deceleration control unit 21e to determine whether the required deceleration Gr is equal to or greater than the threshold LimG_L (S320). If it is determined at S315 that the throttle valve is open (the accelerator is depressed), then the control unit 20 uses the deceleration control unit 21e to determine whether the required deceleration Gr is equal to or above the threshold LimG_h (S325).

If it is determined at S320 and S325 that the required deceleration Gr is equal to or above the respective thresholds, then the control unit 20 uses the deceleration control unit 21e to set the deceleration control status DS to 1 (S330, S335). Namely, if the host vehicle approaches the curve zone Zr without decelerating, the required deceleration Gr for decreasing the vehicle speed to the target vehicle speed V₀ increases as the host vehicle approaches the curve zone Zr. If the required deceleration Gr exceeds a threshold, the deceleration control status DS is set to 1 to ensure that the deceleration control is executed after a threshold is exceeded. Note that in the present embodiment, the time at which deceleration is initiated differs depending on the state of the throttle valve. The thresholds LimG_h and LimG_L are different values that correspond to when the throttle valve is open and closed, respectively, and LimG_h is set greater than LimG_L.

However, if it is determined at S320 and S325 that the required deceleration Gr is not equal to or above the respective thresholds, then the control unit 20 uses the deceleration control unit 21e to determine whether the host vehicle has reached the start point Rs of the curve zone Zr (S340). Namely, the control unit 20 obtains the current position of the host vehicle based on the output signals from the GPS receiving portion 41 and the like, then refers to the deceleration zone information 30a2 to obtain the position of the start point Rs of the curve zone Zr and determines whether the host vehicle has passed the start point Rs of the curve zone Zr. If it is determined at S340 that the host vehicle has reached the start point Rs of the curve zone Zr, then the control unit 20 sets the deceleration control status DS to 2 (S345). Namely, when the host vehicle has reached the curve zone Zr without the required deceleration Gr exceeding a threshold, the control unit 20 sets the deceleration control status DS to 2. If it is determined at S340 that the host vehicle has not reached the end point Rs of the deceleration zone Zd, then the control unit 20 returns to the process shown in FIG 5.

### (2-3) Deceleration Control Process

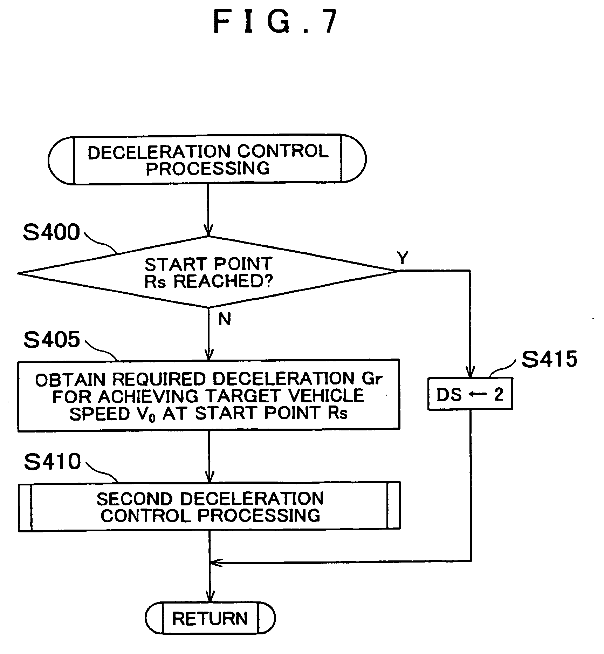

FIG 7 is a flowchart that shows the deceleration control process at S215. According to the deceleration control process, the host vehicle is decelerated to the target vehicle speed V₀. Using the deceleration control unit 21e, the control unit 20 determines whether the host vehicle has reached the start point Rs of the curve zone Zr (the end point of the deceleration zone Zd) (S400). Namely, the control unit 20 determines the current position of the host vehicle based on the output signals from the GPS receiving portion 41 and the like, then refers to the curve zone information 30al to obtain the position of the start point Rs of the curve zone Zr and determine whether the host vehicle reaches the start point Rs of the curve zone Zr.

If it is determined at S400 that the host vehicle has not reached the start point Rs of the curve zone Zr, then the control unit 20 determines the required deceleration Gr needed to decelerate the host vehicle to the target vehicle speed V₀ at the start point Rs of the curve zone Zr using the vehicle speed obtaining unit 21a and the deceleration control unit 21e (S405). Such a process is identical to that of step S305. The control unit 20 then executes a second deceleration control process (S410). If it is determined at S400 that the host vehicle has reached the start point Rs of the curve zone Zr, then the control unit 20 sets the deceleration control status DS to 2 (S415). Namely, when the host vehicle reaches the curve zone Zr, the deceleration control status DS is set to 2 to ensure that the process to maintain the vehicle speed without deceleration is carried out. Note that after S410 and S415, the control unit 20 returns to the process shown in FIG. 5.

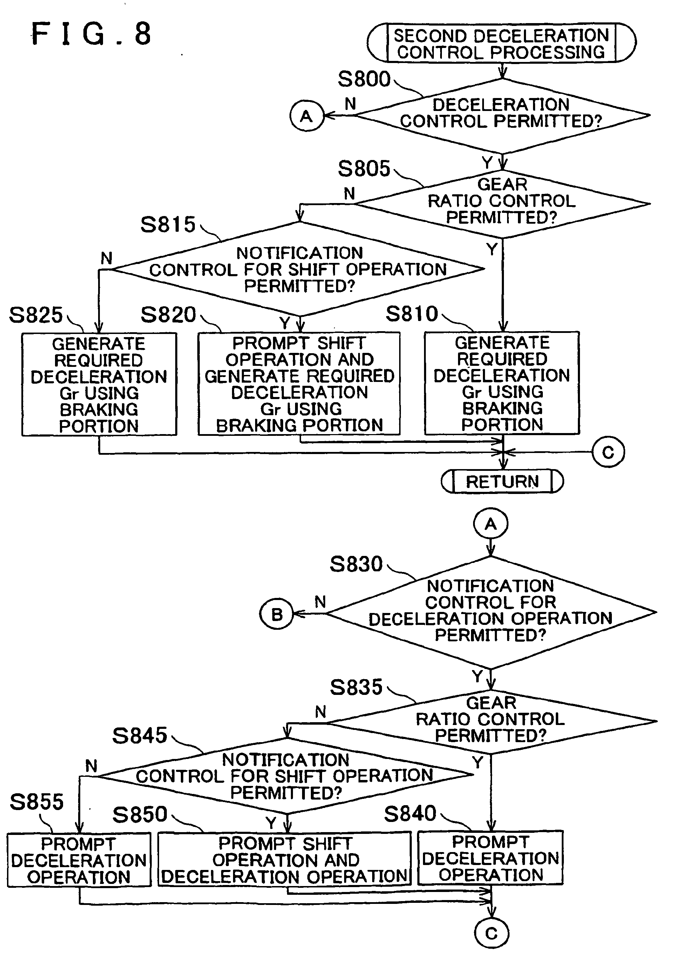

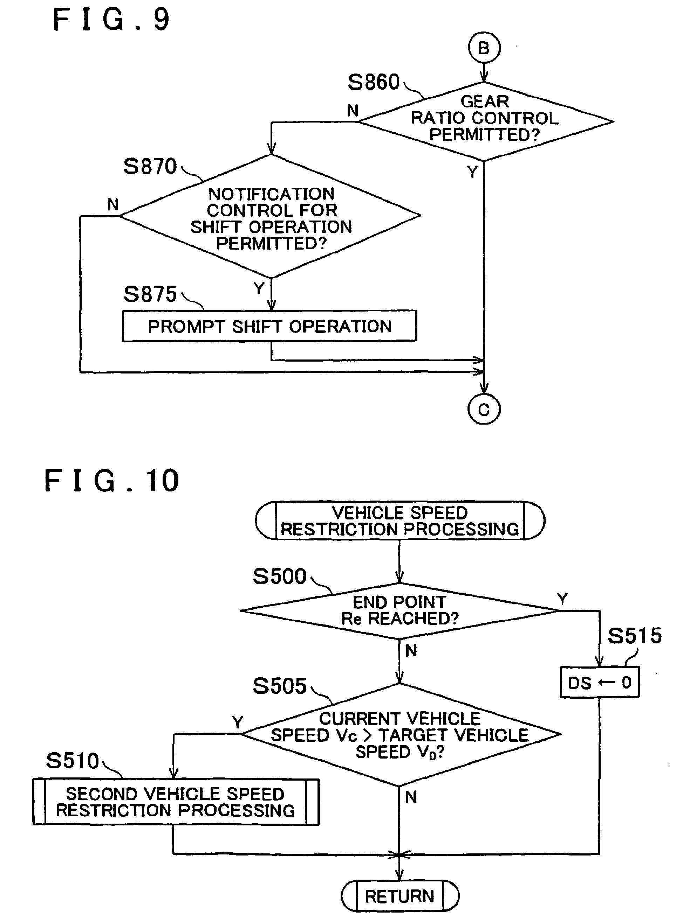

FIGS. 8 and 9 are flowcharts that show the second deceleration control process at S410. The second deceleration control process executes the driving support control set by the user with respect to the characteristics matching the characteristics of the roads on which the host vehicle is traveling. Thus, in the second deceleration control process, the following process is executed based on the driving support control settings as shown in FIG 3B and obtained at S140, and based on the road characteristic information obtained at S130. Using the deceleration control unit 21e, the control unit 20 first determines whether execution of the deceleration control is permitted (S800). If it is determined that execution of the deceleration control is permitted, then the control unit 20 determines whether execution of the gear ratio control is permitted through the gear ratio control unit 21d (S805). If it is determined that execution of the deceleration control is permitted, then, via the deceleration control unit 21e, the control unit 20 controls the braking portion to generate a deceleration so that the host vehicle deceleration reaches required deceleration Gr (S810). Specifically, the control unit 20 obtains the current gear ratio Sn and the current throttle opening Th to obtain a deceleration Ge to be generated by the engine brake based on the engine speed at the gear ratio Sn and the throttle opening Th. The control unit 20 then outputs a control signal to the braking portion 45 for generating a deceleration equivalent to (Gr - Ge) using the brake.

Thus, the brake is operated by the braking portion 45 to compensate for the difference between the required deceleration Gr and the deceleration Ge (Gr - Ge), and the deceleration of the host vehicle becomes the required deceleration Gr. Because, as described above, the required deceleration Gr is the deceleration required to bring the host vehicle to the target vehicle speed V₀ within the distance Lc, repeating the above control converges the vehicle speed of the host vehicle on the target vehicle speed V₀. Note that the gear ratio in the above deceleration control is determined based on the required acceleration a, not the required deceleration Gr. The gear ratio of the host vehicle is switched to the acceleration gear ratio Sa at any point within the deceleration zone Zd, if execution of the gear ratio control is permitted, through a process that will be described later.

If it is determined at S805 that execution of the gear ratio control is not permitted, then the control unit 20 determines whether execution of the shift notification control to prompt a shift operation is permitted through the processing executed by the gear ratio control unit 21d (S815). If it is determined that execution of the shift notification control is permitted, then the control unit 20 uses the gear ratio control unit 21d to provide a notification that prompts the user to change gear, and uses the deceleration control unit 21e to generate the required deceleration Gr using the braking portion (S820). Specifically, a notification is given through the user interface 48 to prompt the user to change the gear ratio of the host vehicle to the acceleration gear ratio Sa, which is obtained through the gear ratio obtaining process that will be described later. For example, if the current gear speed is one level higher than the gear speed that corresponds to the acceleration gear ratio Sa, the user is notified by a voice that says, "Please shift down one speed" or similar wording to that effect. Note that, even though the second deceleration control process is repeatedly executed until the host vehicle reaches the start point Rs, the user may be notified at least once before reaching the start point Rs. In addition, after it is detected that the user has shifted to the acceleration gear ratio Sa, the same notification is not repeated. Further note that the control content to generate the required deceleration Gr using the braking portion is identical to that at S810 (i.e., generating (Gr - Ge) using the brake). S810 and S820 differ in that S820 is a process that is executed when execution of the gear ratio control is not permitted. In the gear ratio selection process and the gear ratio obtaining process that will be described later, if execution of the gear ratio control is not permitted, then the gear ratio is not changed to the acceleration gear ratio Sa unless the user performs the shift; however, in S810 the gear ratio is automatically switched to the acceleration gear ratio Sa.

If it is determined at S815 that execution of the shift notification control is not permitted, then the control unit 20 then controls the braking portion, via the deceleration control unit 21e, to decelerate the host vehicle at the required deceleration rate Gr (S825). The control to generate the required deceleration Gr using the braking portion is identical to that at S810 (i.e., generating (Gr - Ge) using the brake.

If it is determined at S800 that execution of the deceleration control is not permitted, then the control unit 20 determines whether execution of the deceleration notification control is permitted through the deceleration control unit 21e (S830). If it is determined that execution of the deceleration notification control is permitted, then the control unit 20 uses the gear ratio control unit 21d to determine whether execution of the gear ratio control is permitted (S835). If it is determined that execution of the gear ratio control is permitted, then the deceleration control unit 21e prompts the user to perform the driver to change gears (S840). Specifically, the control unit 20 obtains the deceleration Ge that is generated by the engine brake, and if Gr is greater than Ge, the control unit 20 generates a voice that says, "Please step on the brake to decelerate" or similar wording to that effect through the user interface portion 48 at least once before the host vehicle reaches the start point Rs. The deceleration Ge that is generated by the engine brake refers to a deceleration that acts on the host vehicle when the gear ratio is set to the acceleration gear ratio Sa in the gear ratio selection process that will be described later.

If it is determined at S835 that execution of the gear ratio control is permitted, then the control unit 20 determines whether execution of the shift notification control is permitted through the processing executed by the gear ratio control unit 21d (S845). If execution of the shift notification control is permitted, then the control unit 20 uses the gear ratio control unit 21d to provide a notification that prompts the user to change gear, and uses the deceleration control unit 21e to provide a notification that prompts the user to decelerate the host vehicle (e.g., to operate the brake) (S850). As a specific example, the current gear speed may be one gear higher than the gear speed that corresponds to the acceleration gear ratio Sa, and Gr is greater than Ge as a result of computing the deceleration Ge that corresponds to the engine brake when the gear speed is switched to the acceleration gear ratio Sa. In such case, a notification such as "Please shift down one gear and step on the brake to decelerate" is made.

If it is determined at S845 that execution of the shift notification control is not permitted, then the control unit 20 uses the deceleration control unit 21e to provide a notification that prompts the driver to decelerate the host vehicle (S855). Specifically, if the required deceleration rate Gr is greater than Ge, a voice that says, "Please step on the brake" or similar wording to that effect is generated through the user interface portion 48. As described at S840, S850, and S855, according to the present embodiment, if the user has not permitted the execution of the deceleration control using the braking portion, but permitted execution of the deceleration notification control, then the driving support device side may prompt the user to decelerate the host vehicle without executing the deceleration control that uses the braking portion.

If it is determined at S830 that execution of the deceleration notification control is not permitted, then the control unit 20 uses the gear ratio control unit 21d to determine whether execution of the gear ratio control is permitted (FIG 9, S860). If execution of the gear ratio control is permitted, the second deceleration control process is ended. Note that at such time in the host vehicle, the deceleration Ge that corresponds to the engine brake is generated as a result of switching the gear ratio to the acceleration gear ratio Sa through the gear ratio selection process that will be described later.

If it is determined at S860 that execution of the gear ratio control is not permitted, then the control unit 20 determines whether execution of the shift notification control is permitted using the gear ratio control unit 21d (S870). If execution of the shift notification control is permitted, then the control unit 20 uses the gear ratio control unit 21d to provide a notification that prompts the user to shift to the acceleration gear ratio Sa (S875). When the user performs a shift operation to the acceleration gear ratio Sa in accordance with the notification, the deceleration Ge that corresponds to the engine brake is generated as a result of switching the gear ratio to the acceleration gear ratio Sa. If it is determined at S870 that execution of the shift notification control is not permitted, then the control unit 20 ends the second deceleration control process and returns to the process of FIG 7.

### (2-4) Vehicle Speed Restriction Process

FIG 10 is a flowchart that shows the vehicle speed restriction process at S225. According to the vehicle speed restriction process, processing is performed for maintaining the vehicle speed of the host vehicle at the target vehicle speed V₀. To this end, first, the control unit 20 uses the deceleration control unit 21e to determine whether the host vehicle has reached the end point Re of the curve zone Zr (the start point of the acceleration zone Za) (S500). Namely, the control unit 20 obtains the current position of the host vehicle based on the output signals from the GPS receiving portion 41 and the like, then refers to the curve zone information 30al to obtain the position of the end point Re of the curve zone Zr and determine whether the host vehicle reaches the end point Re of the acceleration zone Za.

If it is determined at S500 that the host vehicle has not reached the end point Re of the curve zone Zr, then the control unit 20 uses the deceleration control unit 21e to specify the current vehicle speed Vc based on the output information of the vehicle speed sensor 42 and determine whether the current vehicle speed Vc exceeds the target vehicle speed V₀ (S505). If it is determined at S505 that the current vehicle speed Vc exceeds the target vehicle speed V₀, then the control unit 20 executes a second vehicle speed restriction process (S510). However, if it is determined at S500 that the host vehicle has reached the end point Re of the curve zone Zr, then the control unit 20 sets the deceleration control status DS to 0 to end the deceleration control (S515). If it is determined subsequent to S510 and S515, or at S505, that the current vehicle speed Vc does not exceed the target vehicle speed V₀, then the control unit 20 returns to the process shown in FIG 5.

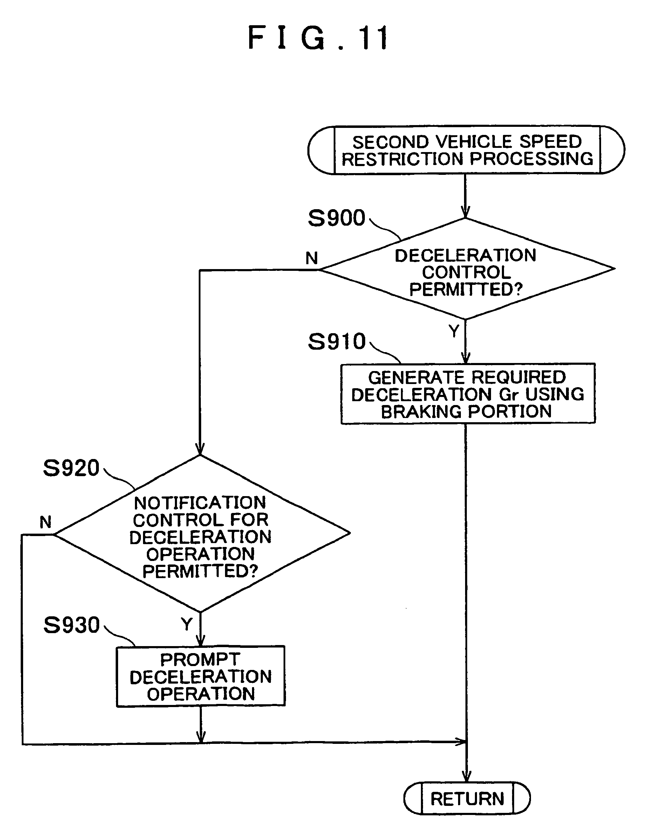

FIG. 11 is a flowchart that shows the second vehicle speed restriction process at S510. The second vehicle speed restriction process executes the driving support control set by the user with respect to the characteristics that match those of the road on which the host vehicle is traveling. Thus, in the second vehicle speed restriction process, the following process is executed based on the driving support control settings as shown in FIG 3B and obtained at S 140, and based on the road characteristic information obtained at S 130. First, the control unit 20 uses the deceleration control unit 21e to determine whether the execution of the deceleration control is permitted (S900). If it is determined that execution of the deceleration control is permitted, the control unit 20 then controls the braking portion to decelerate the host vehicle at the required deceleration rate Gr (S910). The control content at S910 is identical to that at S810 described above.

If it is determined at S900 that execution of the deceleration control is not permitted, then the control unit 20 determines whether execution of the deceleration notification control is permitted through the processing executed by the deceleration control unit 2 1 e (S920). If execution of the deceleration notification control is permitted, then the control unit 20 provides a notification that prompts the user to decelerate the host vehicle (S930). The process at S930 is identical to that at S840 described above. Note that the notification for a deceleration operation at S930 may be executed at least once before the host vehicle reaches the end point Re. If it is determined at S920 that execution of the deceleration notification control is not permitted, then the control unit 20 ends the second vehicle speed restriction process and returns to the process of FIG 10.

### (2-5) Gear Ratio Selection Process

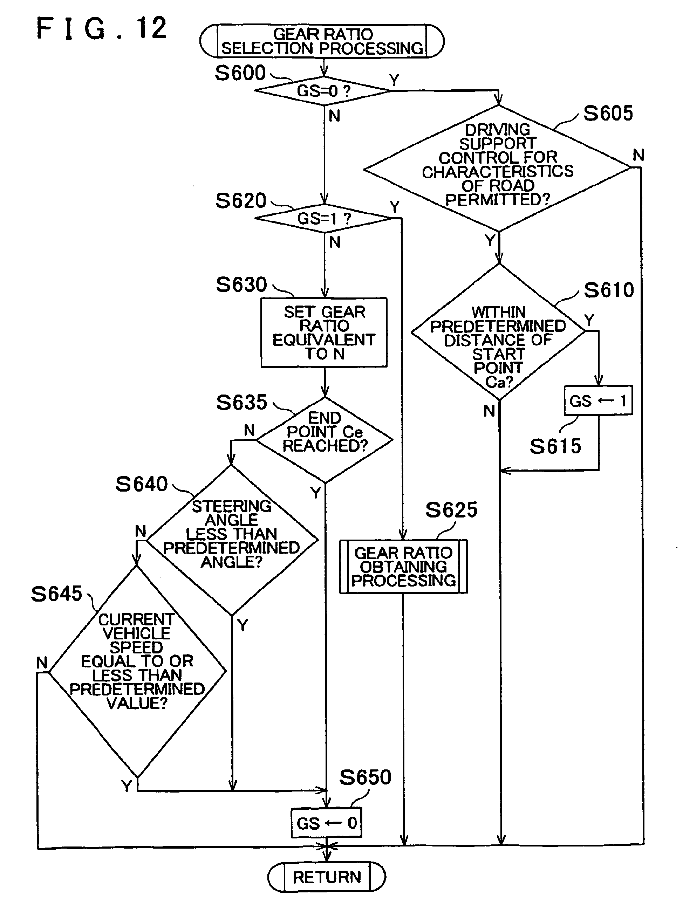

FIG 12 is a flowchart that shows the gear ratio selection process at S 160. According to the gear ratio selection process, processing is executed for specifying the gear ratio control status GS, obtaining the acceleration gear ratio Sa, and setting the gear ratio. In the gear ratio selection process, the control unit 20 determines whether the gear ratio control status GS equals 0 (S600), or 1 (S620). If it is determined at S600 that GS equals 0, then the control unit 20 refers to the driving support control settings obtained at S 140 to determine whether the user has allowed execution of the driving support control for a road with the characteristics obtained at S 130 (S605). If it is determined that the user has allowed execution of the driving support control for a road with the characteristics obtained at S 130, then the control unit 20 executes the process (S61 0, S615) for setting the gear ratio control status GS to 1. If it is determined at S620 that GS equals 1, then the gear ratio obtaining process is executed (S625).

Note that at S605, specifically, the control unit 20 refers to the shift-related controls set by the user with respect to the obtained characteristics of the roads on which the host vehicle travels (see FIG 3B); and if no intervention is set, then a NO determination is made and the gear ratio selection process ends. When the shift-related controls set by the user with respect to the obtained characteristics of the roads on which the host vehicle travels are set to other than no intervention, a affirmative determination (YES) is made at S605 and the control unit 20 next proceeds to the process at S610. At S610, the control unit 20 determines whether the current position of the host vehicle is within a predetermined distance of the start point Ca of the deceleration zone Zd. If it is determined at S610 that the current position of the host vehicle is not within a predetermined distance of the start point Ca of the deceleration zone Zd, then the control unit 20 skips the process at S615 and returns to the process shown in FIG 4. Meanwhile, if it is determined that the current position of the host vehicle is within a predetermined distance of the start point Ca of the deceleration zone Zd, the control unit 20 sets the gear ratio control status GS to 1. Namely, the control unit 20 sets GS equal to 1, which is the state for obtaining the acceleration gear ratio Sa before the deceleration zone Zd.

The gear ratio obtaining process at S625 will be described in detail later; however, according to the gear ratio obtaining process, a process is performed to substitute a value that indicates the gear speed corresponding to the acceleration gear ratio Sa for a variable N, which indicates the gear speed corresponding to the gear ratio, and setting the gear ratio control status GS to 2. In FIG 12, if it is determined that GS does not equal 0 at S600 and that GS does not equal 1 at S620, i.e., when the gear ratio control status GS is 2, the control unit 20 uses the gear ratio control unit 21d to set the gear ratio such that the host vehicle travels at a gear ratio corresponding to the variable N (S630). Here, a value that indicates the gear speed corresponding to the acceleration gear ratio Sa is substituted for the variable N, and the control unit 20 outputs a control signal to the transmission 44 to shift to the gear speed indicated by the variable N.

Next, the control unit 20 uses the gear ratio control unit 21d to determine whether to maintain the gear ratio at the acceleration gear ratio Sa. Namely, the control unit 20 determines whether the host vehicle has reached the end point Ce of the acceleration zone Za (S635), determines whether a steering angle is less than a predetermined steering angle (S640), and determines whether the current vehicle speed is equal to or less than predetermined value (S645). If it is determined at S635 that the host vehicle has reached the end point Ce, or determined at S640 that the steering angle is less than the predetermined steering angle, or determined at S645 that the current vehicle speed is equal to or below the predetermined speed, then the control unit 20 sets the gear ratio control status GS to 0 (S650). Otherwise, the control unit 20 skips the process at S650.

Note that in the present embodiment, once the gear ratio control status GS becomes 0, the state in which the gear ratio is set to the acceleration gear ratio Sa is canceled, which enables acceleration in accordance with a driver's operation. Also, at S635, the control unit 20 obtains the current position of the host vehicle based on the output signals from the GPS receiving portion 41 and the like, then refers to the acceleration zone information 30a3 to obtain the position of the end point Ce of the acceleration zone Za and determine whether the current position of the host vehicle is beyond the end point Ce. Accordingly, the time before the host vehicle passes the end point Ce is considered to be a state where acceleration may be performed while the gear ratio is set to the acceleration gear ratio Sa, and the gear ratio may be set in accordance with the driver's operation once the host vehicle passes the end point Ce.

At S640, the control unit 20 obtains output information from a steering sensor (not shown) and specifies the steering angle based on the output information. By comparing the steering angle and a predetermined angle, the control unit 20 determines whether the steering angle is less than the predetermined steering angle. Note that, here, the time when the steering angle is less than the predetermined steering angle is considered to be a state where acceleration may be performed while the gear ratio is set to the acceleration gear ratio Sa, and the gear ratio may be set in accordance with the driver's operation when the steering angle is not less than the predetermined steering angle.

At S645, the control unit 20 specifies the current vehicle speed of the host vehicle based on the output information of the vehicle speed sensor 42, and determines whether the current vehicle speed is equal to or below a predetermined speed. Here, the time when the current vehicle speed is equal to or below the predetermined speed is considered to be a state where the host vehicle may be accelerated while the gear ratio is set to the acceleration gear ratio Sa, and the gear ratio may be set in accordance with the driver's operation if the current vehicle speed is not equal to or less than the predetermined value.

### (2-6) Gear Ratio Obtaining Processing

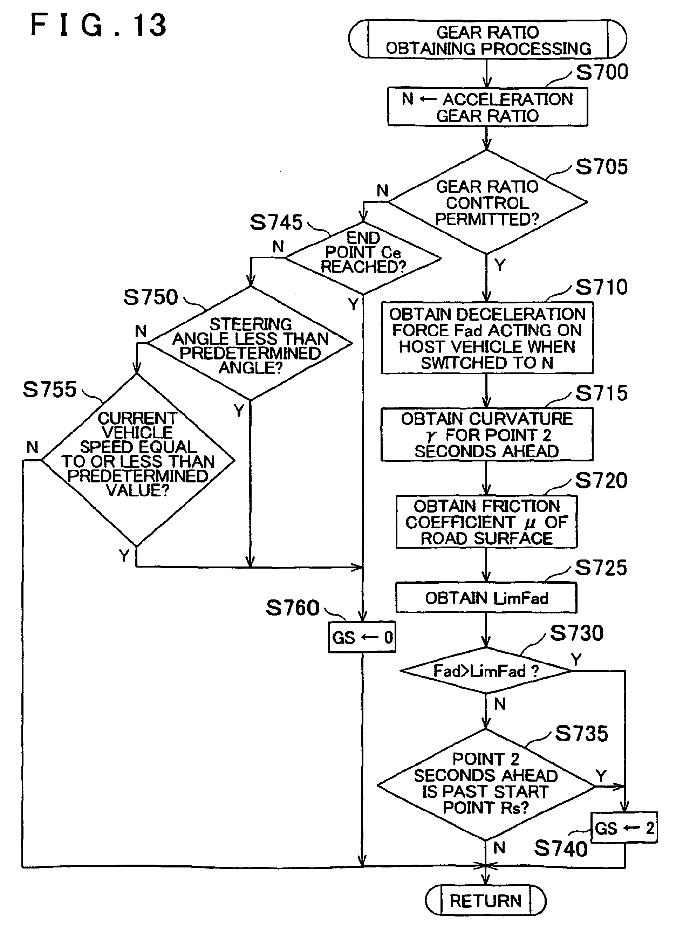

FIG 13 is a flowchart that shows the gear ratio obtaining process at S625. According to the gear ratio obtaining process, processing is performed in order to set a state (GS=2) for substituting the gear speed corresponding to the acceleration gear ratio Sa to N and then shifting to the gear speed that corresponds to the acceleration gear ratio Sa.

In the gear ratio obtaining process, the control unit 20 substitutes the gear speed that corresponds to the acceleration gear ratio Sa for N (S700). Namely, the control unit 20 uses the vehicle speed obtaining unit 21a, the required acceleration obtaining unit 21b, and the acceleration gear ratio obtaining unit 21c to compute the acceleration gear ratio Sa. Specifically, the control unit 20 uses the vehicle speed obtaining unit 21a to obtain the target vehicle speed V₀ based on the radius R of the curve zone, and refers to the acceleration zone information 30a3 to obtain the recommended vehicle speed V₁.

Next, the control unit 20 uses the required acceleration obtaining unit 21b to determine the distance L₁ of the acceleration zone based on the acceleration zone information 30a3, and calculates the required acceleration using the equation a=(V₁² - V₀²)/2L₁. Through the process executed by the acceleration gear ratio obtaining unit 21c, the control unit 20 then refers to the acceleration zone information 30a3 to obtain the throttle opening Th₁ at the start point Re of the acceleration zone Za, and selects the gear ratio based on the required acceleration a and the target vehicle speed V₀. In the present embodiment, if the speed of the host vehicle is equal to the target vehicle speed V₀ and the throttle opening Th₁ is used, torques Tr₁ to Tr₆ (where 1 to 6 correspond to gear ratios), which are output at the respective gear ratios, are compared with a torque Tra that corresponds to the required acceleration a.

Therefore, the control unit 20 first calculates the torque Tra that corresponds to the required acceleration a as, for example, acceleration × vehicle weight × tire radius / differential gear ratio. The control unit 20 obtains the engine speed (rpm) achieved in the respective gear ratios for the target vehicle speed V₀ as, for example, target vehicle speed V₀ × 1000 / 3600 / (2π × tire radius) × differential gear ratio × 60 × gear ratio × torque converter slip ratio. Consequently, engine speeds Re₁ to Re₆ are obtained at the target vehicle speed V₀ that corresponds to the gear ratios 1 to 6 (sixth to first gear speeds). In addition, the control unit 20 obtains the torques Tr₁ to Tr₆ that may be output at the respective engine speeds Re₁ to Re₆ and the throttle opening Th₁. For the torques Tr₁ to Tr₆, based on a torque characteristic map where the throttle opening Th₁, an engine speed, and a torque are linked with each gear ratio, the torques Tr₁ to Tr₆ may be selected that correspond to the engine speeds Re₁ to Re₆.

After obtaining the torque Tra that corresponds to the required acceleration a and the torques Tr₁ to Tr₆ that are output at each gear ratio as described above, the gear ratio with the lowest fuel consumption among the gear ratios that exceed the torque Tra is selected and set as the acceleration gear ratio Sa. Consequently, if the host vehicle is accelerated at the required acceleration a, the gear ratio that enables the vehicle speed of the host vehicle to reach the recommended vehicle speed V₁ with the lowest consumption of fuel is set as the acceleration gear ratio Sa. After obtaining the acceleration gear ratio Sa, the control unit 20 substitutes a value that indicates the gear speed corresponding to the acceleration gear ratio Sa as the variable N.

Next, the control unit 20 uses the gear ratio control unit 21d to determine whether the driving support control settings indicate that execution of the gear ratio control is permitted (S705). Namely, the following process is carried out in accordance with the settings of the shift-related controls set by the user with respect to characteristics that match the characteristics of the roads on which the host vehicle is traveling (see FIG 3B). If it is determined at S705 that execution of the gear ratio control is not permitted, then the control unit 20 returns to the process of FIG 12 after finishing the processes at S745, S750, S755, and S760. Specifically, in this case, because the process at S710 onward is not executed and the gear ratio control status GS is not set equal to 2, the process at S630 of FIG 12 is not carried out. Therefore, if the user has not permitted the driving support device to shift to the acceleration gear ratio and has permitted execution of only the notification control to prompt the user to shift to the acceleration gear ratio, as described at S820, S850, and S875, the driving support device may prompt the user to shift to the acceleration gear ratio, but does not actually execute the shift to the acceleration gear ratio. Note that the processes at S745, S750, S755, and S760 are identical to the processes at S635, S640, S645, and S650 of FIG 12. If it is determined at S705 that execution of the gear ratio control is permitted, then the control unit 20 performs the process of S710 onward.

From S710 onward, the control unit 20 performs processing for setting the gear ratio control status GS to 2 at a timing that prevents the running stability of the vehicle from decreasing, and sets the gear ratio. According to such processing, the control unit 20 computes a deceleration force Fad that acts on the host vehicle when the gear speed of the host vehicle is set to the gear speed that corresponds to the acceleration gear ratio Sa (S710). Here, the deceleration force Fad indicates a deceleration force (a force that acts in the rearward direction of the host vehicle) that acts on the host vehicle when traveling at the current vehicle speed and the current engine speed in the gear speed that corresponds to the acceleration gear ratio Sa. For the deceleration force Fad, similar to the computation of the torques Tr₁ to Tr₆ described above, a torque that corresponds to the gear speed corresponding to the acceleration gear ratio Sa may be obtained and the deceleration force Fad may be computed based on the torque, the vehicle weight, and the like.

The control unit 20 then carries out a process for evaluating forces that generate slip in the host vehicle. First, the control unit 20 uses the gear ratio control unit 21d to obtain a curvature γ at a point two seconds ahead (S715). Namely, the control unit 20 estimates a point that would be two seconds ahead when the host vehicle travels at the current vehicle speed, obtains at least three shape interpolation points or nodes that are closest to the point, and obtains the curvature γ at the point based on at minimum the three shape interpolation points or nodes. The control unit 20 then obtains a friction coefficient µ of the road surface at the point two seconds ahead (S720). The friction coefficient µ of the road surface is obtained through the process executed by the road characteristic information obtaining unit 21g. As a specific example, the friction coefficient may also be determined by using the road surface µ sensor, the raindrop sensor, probe information, and the like that are not shown in the drawings.

Next, the control unit 20 uses the gear ratio control unit 2 1 d to obtain a threshold LimFad for evaluating the forces that generate slip in the host vehicle (S725). In the present embodiment, the threshold LimFad is expressed as ((µ·W·S)² - Fc(γ)²)^{1/2}, where W is the weight of the host vehicle, S is a coefficient greater than zero but equal to or less than one, and Fc(γ) is a function that indicates a lateral force acting on the host vehicle when traveling on a road with the curvature γ. Note that the weight W, the coefficient S, and the function Fc(γ) are stored in the storage medium 30, and the control unit 20 refers to the storage medium 30 to obtain such information and compute the threshold LimFad.

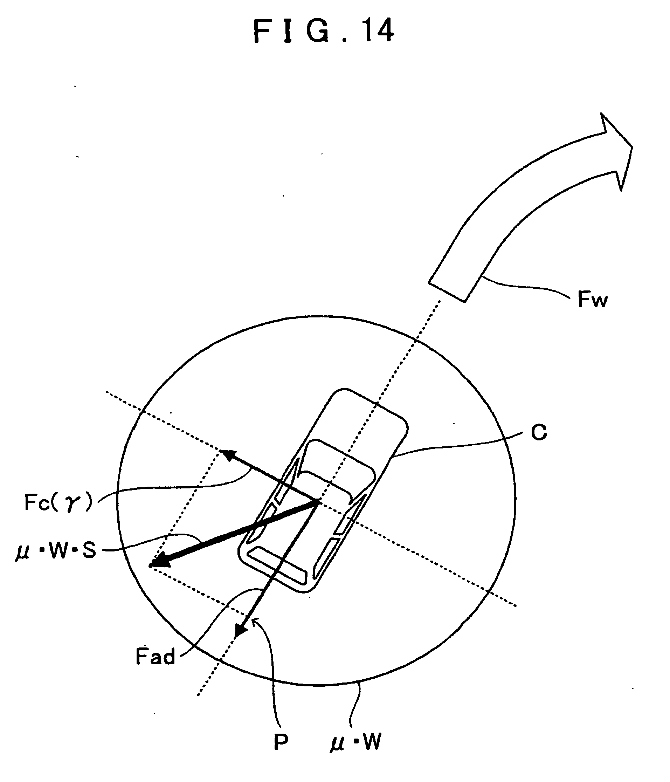

FIG 14 is an explanatory drawing that describes the deceleration force Fad and the threshold LimFad. FIG 14 shows a host vehicle C traveling in the direction of an arrow Fw, and also shows the magnitude of a friction force µ·W acting on the host vehicle C by a solid-line circle. In FIG 14, slip is generated in the host vehicle C when the tip of a vector that represents forces acting on the host vehicle C (a resultant force of the lateral force Fc(y) and a deceleration force) exceeds the solid-line circle. In other words, by breaking down the friction force µ·W into the lateral force Fc(γ) and a deceleration force acting in the rearward direction of the vehicle, the deceleration force may be considered a limit deceleration force at or above which slip occurs.

Hence, in the present embodiment, the threshold LimFad is set to a value obtained by breaking down a value µ·W·S found as a product of the friction force µ·W and the coefficient S, which is one or less, into a force acting in the rearward direction of the vehicle based on the lateral force Fc(γ), such that a constant margin is achieved with respect to the friction force µ·W. In other words, as exemplified in FIG 14, the host vehicle C is considered to have less running stability when the tip of a vector that represents the deceleration force Fad is closer to the outer periphery of the circle than a position P that corresponds to the tip of a component vector of a vector µ·W·S.

Therefore, the control unit 20 determines whether the deceleration force Fad is greater than the threshold LimFad (S730). If it is determined that the deceleration force Fad is not greater than the threshold LimFad, then the control unit 20 determines whether the point two seconds ahead is beyond the start point Rs of the curve zone Zr (S735). If it is determined that the point two seconds ahead is not beyond the start point Rs, then the control unit 20 returns to the process shown in FIG 12. Meanwhile, if it is determined at S730 that the deceleration force Fad is greater than the threshold LimFad, or if it is determined at S735 5 that the point two seconds ahead is beyond the start point Rs of the curve zone Zr, then the control unit 20 sets the gear ratio control status GS to 2 in order to set the gear ratio (S740).

Accordingly, once the gear ratio control status GS is set to 2 following S730 and the process that sets the gear ratio at S630 is performed following the determination at S620, the gear ratio is changed to the acceleration gear ratio Sa before the forces acting on the host vehicle are sufficient to generate slip in the host vehicle. Thus, setting the gear ratio to the acceleration gear ratio Sa makes it possible to set the gear ratio such that slip is not generated in the host vehicle, and enables setting of the gear ratio while also suppressing the effect of shifting on vehicle behavior. It should be noted here that the present invention is not limited to the above configuration, provided that it is possible to evaluate whether the forces acting on the front of the host vehicle will become forces that generate slip. In addition to the configuration as described above, where the forces are evaluated at a time subsequent to the current time by a predetermined interval, a configuration may be used where the forces are evaluated at a position ahead of the current position by a predetermined distance. Further note that the "two seconds" at S71 5 and S735 is only an example; any value may be used provided that the value is greater than the time required for the gear ratio control unit 21d to output the control signal for setting the gear ratio to the acceleration gear ratio Sa to the transmission 44 and complete switching of the gear ratio by the transmission 44 in accordance with the control signal. For example, at S735, any time may be used provided that the gear ratio can be switched to the acceleration gear ratio Sa before the host vehicle reaches the start point Rs. Obviously, a configuration may be adopted that uses the forces at a position ahead of the current position by a predetermined distance as described above in order to evaluate the forces at a time subsequent to the current time by a predetermined interval, and in such case, the predetermined distance is a distance greater than the distance traveled from the start of the process for shifting at the current position to the completion of shifting.

According to the above process, and as shown by a bold dashed line in FIG. 2, once the host vehicle C traveling in sixth speed before entering the deceleration zone Zd approaches the curve zone Zr, the deceleration control is executed and the vehicle speed is decelerated to the target vehicle speed V₀ before the host vehicle C reaches the end point Rs of the deceleration zone Zd. In the deceleration zone Zd, the acceleration gear ratio Sa is computed through the gear ratio obtaining process. Furthermore, the curvature γ of the road two seconds ahead of the host vehicle C is obtained through the gear ratio obtaining process. Once the curvature γ increases and the deceleration force Fad exceeds the threshold LimFad, the deceleration control status GS is set to 2. Therefore, if the acceleration gear ratio Sa is a gear ratio that corresponds to the third gear speed, for example, then the gear speed is set to the third speed according to the process at S630. Thus, as shown by a bold dashed-dotted line in FIG 2, the gear speed in the deceleration zone Zd thereafter, as well as in the curve zone Zr and the acceleration zone Za, is maintained at the third speed, which enables smooth acceleration when acceleration is started in the acceleration zone Za.

As described above, according to the present embodiment, the mode of the driving support control may be switched in accordance with the driving support control settings as set by the user. The driving support control settings are set per road characteristic in the present embodiment. Therefore, according to the present embodiment, it is possible to switch among the gear ratio control, the deceleration control, and the notification controls for a shift operation or a deceleration operation based on the driving support control settings as set by the user per road characteristic.

### (3) Other Embodiments

The present embodiment described above is only an illustrative example for practicing the present invention, and various other embodiments may also be used so long as they can switch a mode of the driving support control when traveling a predetermined road section based on driving support control settings as set by a user. For example, although the target vehicle speed was computed from the radius R of the curve zone Zr in the above embodiment, target vehicle speeds may obviously be linked to curve zones in advance and the linked target vehicle speed may be obtained. Furthermore, the applicability of the present invention is not limited to a curve zone; the present invention may also be applied to a road with a grade. For example, a section that includes a grade is defined as a grade section and a target vehicle speed when the host vehicle reaches the grade section and a recommended vehicle speed subsequent to traveling the grade section are defined. Accordingly, a required acceleration may be specified in the same manner as in the configuration described above and an acceleration gear ratio obtained; the acceleration gear ratio is then reached at a phase before the grade section. Note that the target vehicle speed in such a configuration may be defined as a vehicle speed when decelerating before a start point of a downgrade to a desirable vehicle speed for traveling the downgrade section.

Moreover, the present invention is not limited to a configuration that obtains the gear ratio corresponding to the required acceleration; various other configurations may be adopted so long as a gear ratio capable of accelerating to a vehicle speed faster than the target vehicle speed may be determined. For example, a configuration may be used that learns in advance a rotational speed of a drive source (an engine or a motor) that corresponds to a throttle opening/closing operation after traveling a predetermined road section such as a curve section, operates the drive source at the learned rotational speed after the host vehicle travels the predetermined road section, and specifies an acceleration gear ratio for accelerating to a vehicle speed faster than the target vehicle speed. In other words, various other configurations are possible even if a recommended vehicle speed is not specified, provided that the vehicle speed of the host vehicle after traveling the predetermined road section can be accelerated to a vehicle speed faster than the target vehicle speed.

The acceleration gear ratio is not limited provided that it is at least a sufficient gear ratio required to accelerate the host vehicle to a vehicle speed above the target vehicle speed, and the gear ratio may be determined to achieve smoother acceleration. For example, a parameter such as the throttle opening/closing operation at the start of acceleration, or the rotational speed of the host vehicle drive source may be estimated, and a gear ratio or the like that enables the most efficient acceleration based on the estimation can be selected. For the deceleration control, a configuration that executes a feedback control based on the deceleration as described above or executes a feedback control based on the vehicle speed may also be adopted.

The required acceleration may be any parameter for evaluating energy output by the host vehicle for increasing the vehicle speed from the target vehicle speed to the recommended vehicle speed, and is not limited to the acceleration a described above. For example, a torque, engine output, or the like may be used. Furthermore, in the embodiment described above, the deceleration zone Zd and the acceleration zone Za were set as clothoid sections; however, these sections may obviously be set longer or shorter than a clothoid section provided that the sections are designated as a section for deceleration and a section for acceleration, respectively. Moreover, clothoid sections need not be used. For example, a predetermined road section between a certain curve zone and a subsequent curve zone from among consecutive curve zones may also be employed as an acceleration zone. Various other configurations may also be adopted so long as the transmission is shifted to the acceleration gear ratio before the predetermined road section; the shift to the acceleration gear ratio may be performed at a start point or end point of the predetermined road section, or may be performed when the required deceleration Gr exceeds the thresholds LimG_h and LimG_L.

The above embodiment has a configuration in which the deceleration control is executed when the required deceleration Gr exceeds the thresholds LimG_h and LimG_L. Obviously, however, other configurations such as starting deceleration after passing the start point Ca of the deceleration zone Zd may be employed. In the vehicle speed restriction process is configured such that the vehicle is decelerated if the current vehicle speed Vc exceeds the target vehicle speed V₀. Alternatively, the vehicle speed restriction process may be configured such that the vehicle is accelerated if the current vehicle speed Vc falls below the target vehicle speed V₀. Furthermore, in the above embodiment, the gear ratio with the lowest fuel consumption is selected from among the gear ratios capable of output that exceeds the torque Tra that corresponds to the required acceleration a, and set as the acceleration gear ratio Sa. However, the acceleration gear ratio may be selected based on different criteria. For example, the torque Tra that corresponds to the required acceleration a and the torques Tr₁ to Tr₆ that are output at each gear ratio may be obtained, and the gear ratio with the lowest fuel consumption among the gear ratios that exceed the torque Tra may be set as the acceleration gear ratio Sa.

In other words, the acceleration gear ratio is the gear ratio appropriate for accelerating the host vehicle to the recommended vehicle speed V₁ when accelerating at the required acceleration a while maintaining the gear ratio, and is the gear ratio that decreases the engine speed that corresponds to the throttle opening Th₁ with a minimum degree of reduction in the rotational speed when transmitted to the output side. According to this configuration, the host vehicle may be accelerated from the target vehicle speed V₀ to the recommended vehicle speed V₁ while suppressing an increase in the engine speed as much as possible, while enables efficient acceleration. Note that, while the engine speed corresponding to the throttle opening Th₁ is assumed here, the engine speed may obviously be determined based on a statistical value or the like.

Further note that driving support control settings set per road characteristic is not limited to that shown in FIG 3B of the above embodiment. For example, information may be set that indicates the driving support control settings per composite scene having a plurality of characteristics (e.g. a low µ road with a downgrade).

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device, comprising:
a vehicle speed information obtaining unit (21a) adapted for obtaining a target vehicle speed (V0) for traveling through a predetermined road section (Zr) ahead of a host vehicle;
a driving support control settings obtaining unit (21h) adapted for obtaining driving support control settings whether execution of a driving support control is permitted, with respect to the predetermined road section; and
a deceleration control unit (21e) adapted for controlling a braking portion (45) so as to decelerate a vehicle speed of the host vehicle to the target vehicle speed (V0) before the host vehicle reaches the start point (Rs) of the predetermined road section, if the driving support control settings indicate that execution of a deceleration control using the brake portion (45) is permitted,**characterized by**
an acceleration gear ratio obtaining unit (21c) adapted for obtaining an acceleration gear ratio for accelerating the host vehicle to a vehicle speed faster than the target vehicle speed (V0) after the host vehicle has traveled through the predetermined road section (Zr), and
a gear ratio control unit (21d) adapted for setting a gear ratio of the host vehicle to the acceleration gear ratio before the host vehicle reaches a start point (Rs) of the predetermined road section, if the driving support control settings indicate that execution of a gear ratio control is permitted.

2. The driving support device according to claim 1, wherein
the gear ratio control unit (21d) is adapted for executing a shift notification control to prompt the driver to shift to the acceleration gear ratio before the host vehicle reaches the start point (Rs) of the predetermined road section, if the driving support control settings indicate that execution of the gear ratio control is not permitted, but that execution of a shift notification control is permitted.

3. The driving suppon device according to claim 1 or 2, wherein
the deceleration control unit (21e) is adapted for executing a deceleration notification control to prompt the driver to decelerate the host vehicle before the host vehicle reaches the start point (Rs) of the predetermined road section if the driving support control settings indicate that execution of the deceleration control is not permitted, but that execution of a deceleration notification control is permitted.

4. The driving support device according to claim 2 or 3, wherein
the deceleration control unit (21e) is adapted for executing the deceleration control to control the breaking portion (45) when the gear ratio control unit (21d) executes the shift notification control to prompt the driver to shift to the acceleration gear ratio.

5. The driving support device according to any one of claims 1 to 4, further comprising:
a road characteristic information obtaining unit (21g) that is adapted for obtaining road characteristic information that indicates a characteristic of a road around the host vehicle, wherein
the driving support control settings obtaining unit (21h) is adapted for obtaining information that corresponds to the road characteristic information among the driving support control settings set per road characteristic.

6. The driving support device according to any one of claims 1 to 5, wherein
the deceleration control unit (21e) is adapted for controlling the braking portion (45) to generate a supplemental braking force if a braking force generated through engine braking in the acceleration gear ratio is below a required braking force to deceleration the host vehicle to the target vehicle speed (V0) before the host vehicle reaches the start point (Rs) of the predetermined road section, wherein the magnitude of the braking force generated by the braking portion (45) is equal to the difference between the required braking force and the braking force generated through engine braking.

7. The driving support device according to any one of claims 1 to 6, wherein
the deceleration controls unit (21e) is adapted for control ling the braking portion (45) to generates a braking force such that the host vehicle is decelerated to the target vehicle speed (V0) when the gear ratio of the host vehicle is set to the acceleration gear ratio before the start point (Rs) of the predetermined road section.

8. The driving support device according to any one of claims 1 to 7, wherein
the gear ratio control unit (21d) is adapted for shifting the gear ratio of the host vehicle to the acceleration gear ratio during execution of the deceleration control by the deceleration control unit (21e).

9. The driving support device according to any one of claims 1 to 8, wherein
the predetermined road section (Zr) is a road section for which the host vehicle needs to start deceleration at a predetermined distance before entering the predetermined road section (Zr).

10. The driving support device according to any one of claims 1 to 9, wherein
the predetermined road section (Zr) is at least one of a curve zone having a predetermined curvature and a zone with a grade of a predetermined shape.

11. The driving support device according to any one of claims 1 to 10, wherein
the deceleration control unit (21e) is adapted for cancelling the deceleration control once the host vehicle reaches the start point (Rs) of the predetermined road section, and maintains the target vehicle speed (V0) while the host vehicle travels the predetermined road section (Zr).

12. The driving support device according to any one of claims 1 to 11, wherein
the gear ratio control unit (21d) is adapted for determining the acceleration gear ratio based on a required acceleration to increase from the target vehicle speed (V0) to a vehicle speed (V1) faster than the target vehicle speed (V0) within a predetermined distance from an end point (Re) of the predetermined road section, after the host vehicle passes the end point (Re).

13. The driving support device according to any one of claims 1 to 12, wherein
the gear ratio control unit (21d) is adapted for cancelling the setting of the acceleration gear ratio and allows shifting in accordance with an operation of a driver when any one of the following conditions is met:
(i) the host vehicle is a predetermined distance away from the end point (Re) of the predetermined road section,
(ii) a steering angle is less than a predetermined angle, and
(iii) a current vehicle speed after the host vehicle passes the end point (Re) is equal to or below a predetermined speed.

14. A driving support method comprising:
obtaining a target vehicle speed (V0) for traveling through a predetermined road section (Zr) ahead of a host vehicle;
obtaining (S140) driving support control settings, which indicate whether execution of a driving support control is permitted, with respect to the predetermined road section (Zr); and
controlling (S150) a braking portion (45) to decelerate a vehicle speed of the host vehicle to the target vehicle speed (V0) before the host vehicle reaches the start point (Rs) of the predetermined road section if the driving support control settings indicate that execution of a deceleration control using a brake portion (45) is permitted, **characterized by**
obtaining an acceleration gear ratio for accelerating the host vehicle to a vehicle speed faster than the target vehicle speed (V0) after traveling through the predetermined road section (Zr), and
setting (S160) a gear ratio of the host vehicle to the acceleration gear ratio before the host vehicle reaches a start point (Rs) of the predetermined road section if the driving support control settings indicate that a gear ratio control is permitted.

15. A computer-readable medium that stores computer executable instructions that when executed by a processor cause the processor to execute the method according to claim 14.

## Patentansprüche

1. Fahrunterstützungsvorrichtung, mit
einer Fahrzeuggeschwindigkeitsinformationserlangungseinheit (21a), die angepasst ist zum Beziehen einer Zielfahrzeuggeschwindigkeit (V0) zum Fahren durch einen vorbestimmten Straßenabschnitt (Zr) vor einem Host-Fahrzeug;
einer Fahrunterstützungssteuerungseinstellungserlangungseinheit (21h), die angepasst ist zu Beziehen von Fahrunterstützungssteuerungseinstellungen, ob das Durchführen einer Fahrunterstützungssteuerung erlaubt ist, bezüglich des vorbestimmten Straßenabschnitts; und
einer Verzögerungssteuerungseinheit (21e), die angepasst ist zum Steuern eines Bremsteils (45) zur Verzögerung einer Fahrzeuggeschwindigkeit des Host-Fahrzeugs auf die Zielfahrzeuggeschwindigkeit (V0) bevor das Host-Fahrzeug den Startpunkt (Rs) des vorbestimmten Straßenabschnitts erreicht, wenn die Fahrunterstützungssteuerungseinstellungen angeben, dass das Durchführen einer Verzögerungssteuerung unter Verwendung des Bremsteils (45) erlaubt ist, **gekennzeichnet durch**
eine Beschleunigungsübersetzungsverhältniserlangungseinheit (21c), die angepasst ist zum Beziehen eines Beschleunigungsübersetzungsverhältnisses zum Beschleunigen des Host-Fahrzeugs auf eine Fahrzeuggeschwindigkeit, die größer ist als die Zielfahrzeuggeschwindigkeit (V0), nachdem das Host-Fahrzeug **durch** den vorbestimmten Straßenabschnitt (Zr) gefahren ist, und
eine Übersetzungsverhältnissteuerungseinheit (21d), die angepasst ist zum Setzen eines Übersetzungsverhältnisses des Host-Fahrzeugs auf das Beschleunigungsübersetzungsverhältnisses, bevor das Host-Fahrzeug einen Startpunkt (Rs) des vorbestimmten Straßenabschnitts erreicht, wenn die Fahrunterstützungssteuerungseinstellungen angeben, dass die Durchführung einer Übersetzungsverhältnissteuerung erlaubt ist.

2. Fahrunterstützungsvorrichtung nach Anspruch 1, bei der
die Übersetzungsverhältnissteuerungseinheit (21d) angepasst ist zum Durchführen einer Schaltbenachrichtigungssteuerung zum Auffordern des Fahrers das Beschleunigungsübersetzungsverhältnis zu Schalten, bevor das Host-Fahrzeug den Startpunkt (Rs) des vorbestimmten Straßenabschnitts erreicht, wenn die Fahrunterstützungssteuerungseinstellungen angeben, dass das Durchführen der Übersetzungsverhältnissteuerung nicht erlaubt ist, dass aber das Durchführen einer Schaltbenachrichtigungssteuerung erlaubt ist.

3. Fahrunterstützungsvorrichtung nach Anspruch 1 oder 2, bei der
die Verzögerungssteuerungseinheit (21e) angepasst ist zum Durchführen einer Verzögerungsbenachrichtigungssteuerung zum Auffordern des Fahrers das Host-Fahrzeug zu verzögern bevor das Host-Fahrzeug den Startpunkt (Rs) des vorbestimmten Straßenabschnitts erreicht, wenn die Fahrunterstützungssteuerungseinstellungen angeben, dass das Durchführen der Verzögerungssteuerung nicht erlaubt ist, dass aber das Durchführen einer Verzögerungsbenachrichtigungssteuerung erlaubt ist.

4. Fahrunterstützungsvorrichtung nach Anspruch 2 oder 3, bei der
die Verzögerungssteuerungseinheit (21e) angepasst ist zum Durchführen der Verzögerungssteuerung zur Steuerung des Bremsteils (45), wenn die Übersetzungsverhältnissteuerungseinheit (21d) die Schaltbenachrichtigungssteuerung durchführt zum Auffordern des Fahrers zu dem Beschleunigungsübersetzungsverhältnis zu schalten.

5. Fahrunterstützungsvorrichtung nach einem der Ansprüche 1 bis 4, ferner mit
einer Straßencharakteristikinformationserlangungseinheit (21g), die angepasst ist zum Beziehen von Straßencharakteristikinformation, die eine Charakteristik einer Straße um das Host-Fahrzeug herum angibt, wobei
die Fahrunterstützungssteuerungseinstellungserlangungseinheit (21h) angepasst ist zum Beziehen von Information, die der Straßencharakteristikinformation entspricht, von den Fahrunterstützungssteuerungseinstellungen, die pro Straßencharakteristik gesetzt sind.

6. Fahrunterstützungsvorrichtung nach einem der Ansprüche 1 bis 5, bei der
die Verzögerungssteuerungseinheit (21e) angepasst ist zum Steuern des Bremsteils (45) zum Erzeugen einer zusätzlichen Bremskraft, wenn eine Bremskraft, die durch ein Motorbremsen in dem Beschleunigungsübersetzungsverhältnis erzeugt wird, kleiner ist als eine erforderliche Bremskraft zum Verzögern des Host-Fahrzeugs, auf die Zielfahrzeuggeschwindigkeit (V0), bevor das Host-Fahrzeug den Startpunkt (Rs) des vorbestimmten Straßenabschnitts erreicht, wobei die Größe der Bremskraft, die von dem Bremsteil (45) erzeugt wird, gleiche der Differenz zwischen der erforderlichen Bremskraft und der Bremskraft, die durch das Motorbremsen erzeugt wird, ist.

7. Fahrunterstützungsvorrichtung nach einem der Ansprüche 1 bis 6, bei der
die Verzögerungssteuerungseinheit (21e) angepasst ist zum Steuern des Bremsteils (45) zum Erzeugen einer Bremskraft derart, dass das Host-Fahrzeug auf die Zielfahrzeuggeschwindigkeit (V0) verzögert wird, wenn das Übersetzungsverhältnis des Host-Fahrzeugs auf das Beschleunigungsübersetzungsverhältnis eingestellt ist, vor dem Startpunkt (Rs) des vorbestimmten Straßenabschnitts.

8. Fahrunterstützungsvorrichtung nach einem der Ansprüche 1 bis 7, bei der
die Übersetzungsverhältnissteuerungseinheit (21d) angepasst ist zum Schalten des Übersetzungsverhältnisses des Host-Fahrzeugs auf das Beschleunigungsübersetzungsverhältnis während des Durchführens der Verzögerungssteuerung durch die Verzögerungssteuerungseinheit (21e).

9. Fahrunterstützungsvorrichtung nach einem der Ansprüche 1 bis 8, bei der
der vorbestimmte Straßenabschnitt (Zr) ein Straßenabschnitt ist, für den das Host-Fahrzeug die Verzögerung bei einem vorbestimmten Abstand vor dem Einfahren in den vorbestimmten Straßenabschnitt (Zr) starten muss.

10. Fahrunterstützungsvorrichtung nach einem der Ansprüche 1 bis 9, bei der
der vorbestimmte Straßenabschnitt (Zr) von einer Kurvenzone, die eine vorbestimmte Krümmung aufweist, und einer Zone mit einem Grad einer vorbestimmten Form mindestens eine ist.

11. Fahrunterstützungsvorrichtung nach einem der Ansprüche 1 bis 10, bei der
die Verzögerungssteuerungseinheit (21e) angepasst ist zum Aufheben der Verzögerungssteuerung sobald das Host-Fahrzeug den Startpunkt (Rs) des vorbestimmten Straßenabschnitts erreicht und zum Beibehalten der Zielfahrzeuggeschwindigkeit (V0) während das Host-Fahrzeug durch den vorbestimmten Straßenabschnitt (Zr) fährt.

12. Fahrunterstützungsvorrichtung nach einem der Ansprüche 1 bis 11, bei der
die Übersetzungsverhältnissteuerungseinheit (21d) angepasst ist zum Bestimmen des Beschleunigungsübersetzungsverhältnisses basierend auf einer erforderlichen Beschleunigung zur Erhöhung von der Zielfahrzeuggeschwindigkeit (V0) auf die Fahrzeuggeschwindigkeit (V1), die größer ist als die Zielfahrzeuggeschwindigkeit (V0), innerhalb einer vorbestimmten Strecke von einem Endpunkt (Re) des vorbestimmten Straßenabschnitts aus, nachdem das Host-Fahrzeug den Endpunkt (Re) passiert hat.

13. Fahrunterstützungsvorrichtung nach einem der Ansprüche 1 bis 12, bei der
die Übersetzungsverhältnissteuerungseinheit (21d) angepasst ist zum Aufheben der Einstellung des Beschleunigungsübersetzungsverhältnisses und ein Schalten gemäß einer Operation eines Fahrers erlaubt, wenn irgendeine der folgenden Bedingungen erfüllt ist:
(i) das Host-Fahrzeug ist eine vorbestimmte Strecke von dem Endpunkt (Re) des vorbestimmten Straßenabschnitts entfernt,
(ii) ein Lenkwinkel ist kleiner als ein vorbestimmter Winkel, und
(iii) eine gegenwärtige Fahrzeuggeschwindigkeit, nachdem das Host-Fahrzeug den Endpunkt (Re) passiert hat, ist gleich oder kleiner als eine vorbestimmte Geschwindigkeit.

14. Fahrunterstützungsverfahren, mit
Beziehen einer Zielfahrzeuggeschwindigkeit (V0) zum Fahren durch einen vorbestimmten Straßenabschnitt (Zr) vor einem Host-Fahrzeug;
Beziehen (S140) von Fahrunterstützungssteuerungseinstellungen, die angeben, ob ein Durchführen einer Fahrunterstützungssteuerung erlaubt ist, bezüglich des vorbestimmten Straßenabschnitts (Zr); und
Steuern (S150) eines Bremsteils (45), um eine Fahrzeuggeschwindigkeit des Host-Fahrzeugs auf die Zielfahrzeuggeschwindigkeit (V0) zu verzögern, bevor das Host-Fahrzeug den Startpunkt (Rs) des vorbestimmten Straßenabschnitts erreicht, wenn die Fahrunterstützungssteuerungseinstellungen angeben, dass ein Durchführen einer Verzögerungssteuerung unter Verwendung eines Bremsteils (45) erlaubt ist, **gekennzeichnet durch**
Beziehen eines Beschleunigungsübersetzungsverhältnisses zum Beschleunigen des Host-Fahrzeugs auf eine Fahrzeuggeschwindigkeit, die größer als die Zielfahrzeuggeschwindigkeit (V0) ist, nach einem Durchfahren des vorbestimmten Straßenabschnitts, und
Einstellen (S160) eines Übersetzungsverhältnisses des Host-Fahrzeugs auf das Beschleunigungsübersetzungsverhältnis, bevor das Host-Fahrzeug einen Startpunkt (Rs) des vorbestimmten Straßenabschnitts erreicht, wenn die Fahrunterstützungssteuerungseinstellungen angeben, dass eine Übersetzungsverhältnissteuerung erlaubt ist.

15. Computerlesbares Medium, das computerausführbare Anweisungen speichert, die, wenn sie von einem Prozessor ausgeführt werden, den Prozessor veranlassen das Verfahren gemäß Anspruch 14 durchzuführen.

## Revendications

1. Dispositif d'assistance à la conduite, comprenant :
une unité (21a) d'obtention d'informations sur la vitesse d'un véhicule adaptée pour obtenir une vitesse cible (V0) du véhicule pour se déplacer à travers une section de route prédéterminée (Zr) en avant d'un véhicule hôte ;
une unité (21h) d'obtention de réglages de commande d'assistance à la conduite adaptée pour obtenir des réglages de commande d'assistance à la conduite pour savoir si l'exécution d'une commande d'assistance à la conduite est autorisée, par rapport à la section de route prédéterminée ;
et
une unité (21e) de commande de décélération pour commander une portion de freinage (45) afin de décélérer d'une vitesse du véhicule hôte à la vitesse cible (V0) du véhicule avant que le véhicule hôte n'atteigne le point de départ (Rs) de la section de route prédéterminée, si les réglages de commande d'assistance à la conduite indiquent que l'exécution d'une commande de décélération en utilisant la portion de frein (45) est autorisée, **caractérisé par**
une unité (21c) d'obtention de rapport d'engrenage d'accélération adapté pour obtenir un rapport d'engrenage d'accélération afin d'accélérer le véhicule hôte à une vitesse du véhicule plus rapide que la vitesse cible (V0) du véhicule après que le véhicule hôte s'est déplacé à travers la section de route prédéterminée (Zr) ; et
une unité (21d) de commande de rapport d'engrenage adaptée pour régler un rapport d'engrenage du véhicule hôte au rapport d'engrenage d'accélération avant que le véhicule hôte n'atteigne un point de départ (Rs) de la section de route prédéterminée, si les réglages de commande d'assistance à la conduite indiquent que l'exécution d'une commande de rapport d'engrenage est autorisée.

2. Dispositif d'assistance à la conduite selon la revendication 1, dans lequel :
l'unité (21d) de commande de rapport d'engrenage est adaptée pour exécuter une commande de notification de décalage pour inviter le conducteur à se décaler vers le rapport d'engrenage d'accélération avant que le véhicule hôte n'atteigne le point de départ (Rs) de la section de route prédéterminée si les réglages de commande d'assistance à la conduite indiquent que l'exécution de la commande de rapport d'engrenage n'est pas autorisée mais que l'exécution d'une commande de notification de décalage est autorisée.

3. Dispositif d'assistance à la conduite selon la revendication 1 ou 2, dans lequel :
l'unité (21e) de commande de décélération est adaptée pour exécuter une commande de notification de décélération pour inviter le conducteur à décélérer le véhicule hôte avant que le véhicule hôte n'atteigne le point de départ (Rs) de la section de route prédéterminée si les réglages de commande d'assistance à la conduite indiquent que l'exécution de la commande de décélération n'est pas autorisée mais que l'exécution d'une commande de notification de décélération est autorisée.

4. Dispositif d'assistance à la conduite selon la revendication 2 ou 3, dans lequel l'unité (21e) de commande de décélération est adaptée pour exécuter la commande de décélération pour commande la portion de freinage (45) lorsque l'unité (21d) de commande de rapport d'engrenage exécute la commande de notification de décalage à inviter le conducteur à se décaler vers le rapport d'engrenage d'accélération.

5. Dispositif d'assistance à la conduite selon l'une quelconque des revendications 1 à 4, comprenant en outre : une unité (21g) d'obtention d'informations de caractéristique de route qui est adaptée pour obtenir des informations de caractéristique de route qui indiquent une caractéristique d'une route autour du véhicule hôte, dans lequel :
l'unité (21h) d'obtention de réglages de commande d'assistance à la conduite est adaptée pour obtenir des informations qui correspondent aux informations de caractéristique de route parmi les réglages de commande d'assistance à la conduite établis par caractéristique de route.

6. Dispositif d'assistance à la conduite selon l'une quelconque des revendications 1 à 5, dans lequel :
l'unité de commande de décélération (21e) est adaptée pour commander la portion de freinage (45) afin de générer une force de freinage supplémentaire si une force de freinage générée par un freinage moteur dans le rapport d'engrenage d'accélération est en dessous d'une force de freinage requise pour décélérer le véhicule hôte à la vitesse cible (V0) du véhicule avant que le véhicule hôte n'atteigne le point de départ (Rs) de la section de route prédéterminée, dans lequel la grandeur de la force de freinage générée par la portion de freinage (45) est égale à la différence entre la force de freinage requise et la force de freinage générée par freinage moteur.

7. Dispositif d'assistance à la conduite selon l'une quelconque des revendications 1 à 6, dans lequel:
l'unité (21e) de commande de décélération est adaptée pour commander la portion de freinage (45) afin de générer une force de freinage telle que le véhicule hôte soit décéléré à la vitesse cible (V0) du véhicule lorsque le rapport d'engrenage du véhicule hôte est établi au rapport d'engrenage d'accélération avant le point de départ (Rs) de la section de route prédéterminée.

8. Dispositif d'assistance à la conduite selon l'une quelconque des revendications 1 à 7, dans lequel :
l'unité (21d) de commande de rapport d'engrenage est adaptée pour décaler le rapport d'engrenage du véhicule hôte au rapport d'engrenage d'accélération pendant l'exécution de la commande de décélération par l'unité (21e) de commande de décélération.

9. Dispositif d'assistance à la conduite selon l'une quelconque des revendications 1 à 8, dans lequel :
la section de route prédéterminée (Zr) est une section de route pour laquelle le véhicule hôte a besoin de démarrer une décélération à une distance prédéterminée avant d'entrer dans la section de route prédéterminée (Zr).

10. Dispositif d'assistance à la conduite selon l'une quelconque des revendications 1 à 9, dans lequel :
la section de route prédéterminée (Zr) est au moins l'une des zones suivantes : une zone courbe ayant une courbure prédéterminée et une zone avec un nivellement d'une forme prédéterminée.

11. Dispositif d'assistance à la conduite selon l'une quelconque des revendications 1 à 10, dans lequel :
l'unité de commande de décélération (21e) est adaptée pour annuler la commande de décélération une fois que le véhicule hôte atteint le point de départ (Rs) de la section de route prédéterminée, et maintient la vitesse cible (V0) du véhicule tandis que le véhicule hôte parcourt la section de route prédéterminée (Zr).

12. Dispositif d'assistance à la conduite selon l'une quelconque des revendications 1 à 11, dans lequel :
l'unité de commande de rapport d'engrenage (21d) est adaptée pour déterminer le rapport d'engrenage d'accélération sur la base d'une accélération requise pour grimper de la vitesse cible (V0) du véhicule à une vitesse (V1) du véhicule plus rapide que la vitesse cible (V0) du véhicule sur une distance prédéterminée à partir d'un point final (Re) de la section de route prédéterminée après que le véhicule hôte est passé par le point final (Re).

13. Dispositif d'assistance à la conduite selon l'une quelconque des revendications 1 à 12, dans lequel :
l'unité de commande de rapport d'engrenage (21d) est adaptée pour annuler le réglage du rapport d'engrenage d'accélération et permet un décalage selon une opération d'un conducteur lorsque l'une quelconque des conditions suivantes est remplie :
(i) le véhicule hôte est à une distance prédéterminée du point final (Re) de la section de route prédéterminée,
(ii) un angle de braquage est inférieur à un angle prédéterminée, et
(iii) une vitesse courante du véhicule après que le véhicule hôte est passé par le point final (Re) est égale ou inférieure à une vitesse prédéterminée.

14. Procédé d'assistance à la conduite comprenant les étapes consistant à :
obtenir une vitesse cible (V0) du véhicule pour un déplacement à travers une section de route prédéterminée (Zr) à l'avant d'un véhicule hôte ;
obtenir (S140) des réglages de commande d'assistance à la conduite, qui indiquent si l'exécution d'une commande d'assistance à la conduite est autorisée, par rapport à la section de route prédéterminée (Zr) ; et
commander (S150) une portion de freinage (45) pour décélérer une vitesse du véhicule hôte à la vitesse cible (V0) du véhicule avant que le véhicule hôte n'atteigne le point de départ (Rs) de la section de route prédéterminée si les régales de commande d'assistance à la conduite indiquent que l'exécution d'une commande de décélération en utilisant une portion de freinage (45) est autorisée, **caractérisé par** les étapes consistant à :
obtenir un rapport d'engrenage d'accélération pour accélérer le véhicule hôte à une vitesse du véhicule plus rapide que la vitesse cible (V0) du véhicule après déplacement sur la section de route prédéterminée (Zr), et
régler (S160) un rapport d'engrenage du véhicule hôte au rapport d'engrenage d'accélération avant que le véhicule hôte n'atteigne un point de départ (Rs) de la section de route prédéterminée si les réglages de commande d'assistance à la conduite indiquent qu'une commande de rapport d'engrenage est autorisée.

15. Support lisible par ordinateur qui stocke des instructions exécutables par ordinateur qui, une fois exécutées par un processeur, amènent le processeur à exécuter le procédé selon la revendication 14.
